# EUROPEAN PATENT APPLICATION

(11) **EP 4 534 316 A1**
(43) Date of publication of application: **09.04.2025**
(21) Application number: 23835351.0
(22) Date of filing: 26.06.2023
(51) Int. Cl.: B60K 15/04, B60K 15/063, B60L 50/72

(54) **WORK VEHICLE**

(30) Priority: 07.07.2022 JP 2022109766; 07.07.2022 JP 2022109767
(71) Applicant: Kubota Corporation, Osaka 556-8601 (JP)
(72) Inventor: MINAMIDE, Yuki, Sakai-shi, Osaka 590-0908 (JP); TAKAKI, Go, Sakai-shi, Osaka 590-0908 (JP); IWAMI, Kenichi, Sakai-shi, Osaka 590-0908 (JP); SAKANO, Tomoyoshi, Sakai-shi, Osaka 590-0908 (JP); TAKAKI, Takahiro, Sakai-shi, Osaka 590-0908 (JP); AMITANI, Kodai, Sakai-shi, Osaka 590-0908 (JP); HAYASHI, Yosuke, Sakai-shi, Osaka 590-0908 (JP)
(74) Representative: Cabinet Beau de Loménie
(86) International application number: PCT/JP2023/023484
(87) International publication number: WO 2024/009817

(57) **Abstract**

A work vehicle of the present invention includes a fuel cell, at least one fuel tank to store fuel to be supplied to the fuel cell, a motor connected to the fuel cell, a vehicle frame that rotatably supports front wheels and rear wheels, and a fueling port connected to the at least fuel tank via piping. The fueling port is provided at a position higher than an axle of the front wheels.

## Description

### TECHNICAL FIELD

The present disclosure relates to work vehicles each includes an electric motor and a fuel cell.

### BACKGROUND ART

In the field of motor vehicles, where the main purpose is to transport "people" or "objects," electric vehicles (EVs) are becoming increasingly popular. In these vehicles, the driving force (traction) is generated by an electric motor (hereinafter referred to as "motor") instead of an internal combustion engine.

On the other hand, there is a need to reduce the amount of carbon dioxide (CO₂) emitted by work vehicles, such as tractors used in agricultural fields, to realize a decarbonized society. Unlike typical automobiles, work vehicles such as tractors need to tow implements, which are work machines, to perform agricultural tasks such as plowing. Therefore, to achieve the electrification of work vehicles, there are issues to be solved that differ from those of passenger cars.

Patent Document 1 discloses a tractor that includes a fuel cell (FC) power generation system and a motor, while maintaining the structure of a conventional engine-driven tractor with minimal alteration.

### CITATION LIST

### PATENT LITERATURE

[Patent Document 1] Japanese Laid-Open Patent Publication No. 2002-225577

### SUMMARY OF INVENTION

### TECHNICAL PROBLEM

To realize a power generation system for work vehicles using fuel cells, it is necessary to have various components in addition to a fuel tank for storing fuel. However, work vehicles, unlike typical automobiles, have mechanical structures for towing, lifting, or rotating implements. Therefore, it is problematic to adopt the fuel cell power generation system configuration used in conventional electric vehicles "as is" for work vehicles.

This disclosure provides work vehicles each capable of solving one or more of such problems.

### SOLUTION TO PROBLEM

A work vehicle according to the present disclosure, in an exemplary and non-limiting example embodiment, includes a fuel cell, at least one fuel tank to store fuel to be supplied to the fuel cell, a motor connected to the fuel cell, a vehicle frame supporting the fuel cell, the at least one fuel tank, and the motor and rotatably supporting front wheels and rear wheels, and a fueling port connected to the fuel tank via piping. The fueling port is positioned higher than an axle of the front wheels.

A work vehicle according to the present disclosure, in an exemplary and non-limiting example embodiment, includes a fuel cell, at least one fuel tank to store fuel to be supplied to the fuel cell, a motor connected to the fuel cell, a vehicle frame supporting the fuel cell, the at least one fuel tank, and the motor and rotatably supporting front wheels and rear wheels, and a fueling port connected to the fuel tank via piping. The fueling port includes a receptacle that is inclined so that an internal portion is higher than an inlet.

### ADVANTAGEOUS EFFECTS OF INVENTION

According to an example embodiment of the present disclosure, it is possible to reduce or prevent the adhesion of foreign matter such as muddy water or soil to the fueling port, thus enhancing cleanliness around the fueling port. According to another example embodiment of the present disclosure, even when foreign matter such as water intrudes into the interior of the receptacle through the fueling port, it can be easily discharged to the exterior, thus reducing or preventing the penetration of foreign matter deep into the interior of the piping.

### BRIEF DESCRIPTION OF DRAWINGS

[FIG. **1**] A plan view schematically showing a basic configuration example of a work vehicle according to the present disclosure.
[FIG. **2**] A diagram showing a basic configuration example of a fuel cell power generation system mounted on the work vehicle.
[FIG. **3**] A block diagram schematically showing an example of electrical connections and power transmission between components of the work vehicle according to the present disclosure.
[FIG. **4**] A block diagram schematically showing paths of electrical signals (thin solid lines) and coolant paths (dotted lines) between components of the work vehicle according to the present disclosure.
[FIG. **5**] A side view schematically showing a configuration example of a work vehicle according to an example embodiment of the present disclosure.
[FIG. **6A**] A side view schematically showing an example of an arrangement relationship of major portions in a work vehicle according to an example embodiment of the present disclosure.
[FIG. **6B**] A plan view schematically showing an example of an arrangement relationship of major portions in a work vehicle according to an example embodiment of the present disclosure.
[FIG. **7**] A diagram schematically showing a mechanism supporting a fuel tank in an example embodiment of the present disclosure.
[FIG. **8**] A diagram schematically showing a configuration example of a fuel tank module in an example embodiment of the present disclosure.
[FIG. **9**] A diagram schematically showing an arrangement of a fuel gas sensor within a front housing and a tank case in an example embodiment of the present disclosure.
[FIG. **10**] A side view schematically showing an arrangement example of a radiator device in an example embodiment of the present disclosure.
[FIG. **11**] A plan view schematically showing an arrangement example of a radiator device in an example embodiment of the present disclosure.
[FIG. **12**] A side view schematically showing an arrangement example of a fueling port in an example embodiment of the present disclosure.
[FIG. **13**] A side view schematically showing an example of the orientation of a fueling port in an example embodiment of the present disclosure.
[FIG. **14****]** A perspective view of an agricultural tractor according to an example embodiment (hereinafter referred to as "this example embodiment") of the present disclosure.
[FIG. **15**] A side view of the agricultural tractor according to this example embodiment of the present disclosure.
[FIG. **16**] A plan view of the agricultural tractor according to this example embodiment of the present disclosure.
[FIG. **17**] A front view of the agricultural tractor according to this example embodiment of the present disclosure.
[FIG. **18**] A rear view of the agricultural tractor according to this example embodiment of the present disclosure.
[FIG. **19**] A cross-sectional view schematically showing a configuration example of the fueling port in this example embodiment of the present disclosure.
[FIG. **20**] A perspective view showing a configuration example of the fueling port in this example embodiment of the present disclosure.
[FIG. **21**] A side view of the agricultural tractor showing an arrangement example of the fueling port in this example embodiment of the present disclosure.
[FIG. **22**] A plan view of the agricultural tractor showing an arrangement example of the fueling port in this example embodiment of the present disclosure.
[FIG. **23**] A cross-sectional view of a rear fender showing one arrangement example of the fueling port in this example embodiment of the present disclosure.
[FIG. **24A**] A cross-sectional view of a rear fender showing another arrangement example of the fueling port in this example embodiment of the present disclosure.
[FIG. **24B**] A cross-sectional view of a rear fender showing yet another arrangement example of the fueling port in this example embodiment of the present disclosure.
[FIG. **25**] A cross-sectional view of a handle column cover showing another arrangement example of the fueling port in this example embodiment of the present disclosure.
[FIG. **26A**] A cross-sectional view of a fixed housing portion showing another arrangement example of the fueling port in this example embodiment of the present disclosure.
[FIG. **26B**] A perspective view of a fixed housing portion showing another arrangement example of the fueling port in this example embodiment of the present disclosure.
[FIG. **26C**] A side view of a fixed housing portion showing another arrangement example of the fueling port in this example embodiment of the present disclosure.
[FIG. **27**] A cross-sectional view of a movable housing portion showing another arrangement example of the fueling port in this example embodiment of the present disclosure.

### DESCRIPTION OF EMBODIMENTS

The following describes example embodiments of the present disclosure. However, excessively detailed explanations may be omitted. For example, detailed explanations of well-known matters and repetitive explanations of substantially identical configurations may be omitted. This is to avoid the following description from becoming unnecessarily redundant and to facilitate understanding by those skilled in the art. The inventors provide the attached drawings and the following description to enable those skilled in the art to fully understand example embodiments of this disclosure, and do not intend to limit the subject matter described in the claims by these drawings and description. In the following description, the same reference numerals are used for components with the same or similar functions.

The following example embodiments are illustrative and not limiting. The technologies disclosed herein are not restricted to the following example embodiments. For instance, the numerical values, shapes, materials, steps, the order of those steps, screen layouts, and other elements shown in the following example embodiments are merely examples. Various modifications can be made as long as no technical contradictions arise. Additionally, different feature, elements, characteristics, etc., of the example embodiments may be combined as long as there are no technical contradictions.

In this disclosure, the term "work vehicle" refers to a vehicle used to perform a task at a work site. A "work site" includes any place where work is carried out, such as a field, forest, or construction site. A "field" refers to any place where agricultural work is performed, such as an orchard, farm, paddy field, grain farm, or pasture. A work vehicle may include an agricultural machine such as a tractor, rice planter, combine harvester, riding field management vehicle, or riding mower, as well as a non-agricultural vehicle such as a construction work vehicle or snowplow. The work vehicles described in this disclosure may be equipped with an implement (also called a "work machine" or "work device") attached to at least one of its front and rear portions, depending on the nature of the work. Travel of a work vehicle while performing a task may be referred to as "tasked travel."

An "agricultural machine" refers to a machine for agricultural application. Examples of agricultural machines include tractors, harvesters, rice planters, riding field management vehicles, vegetable transplanters, mowers, seeders, spreaders, and agricultural mobile robots. Not only may a work vehicle such as a tractor function as an "agricultural machine" on its own, but also the entire combination of a work vehicle and an implement attached to or towed by the work vehicle may function as an "agricultural machine." An agricultural machine performs agricultural work on the ground in a field, such as tilling, seeding, pest control, fertilizing, planting crops, or harvesting.

### 1. <Basic Configuration of Work Vehicle>

Before explaining specific example embodiments of the work vehicles in this disclosure, an example of the basic configuration and operation of the work vehicle will be described. Each of the work vehicles described below includes a motor and a fuel cell power generation system (hereinafter referred to as "FC power generation system") configured to generate the power necessary to drive the motor.

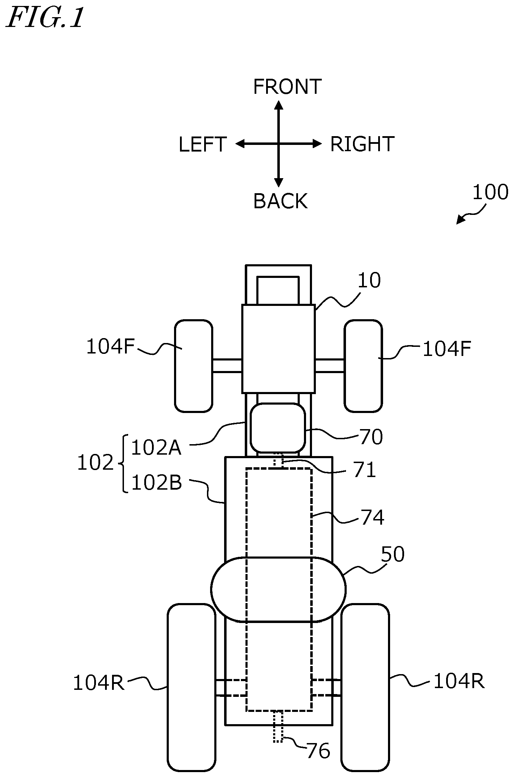

FIG. 1 is a schematic plan view showing an example of the basic configuration of a work vehicle **100** in this disclosure. In this disclosure, the direction in which the work vehicle **100** travels straight forward is called the "forward direction," and the direction in which it travels straight backward is called the "backward direction." In a plane parallel to the ground, the direction extending perpendicularly to the right of the "forward direction" is called the "right direction," and the direction extending perpendicularly to the left is called the "left direction." In FIG. **1****,** the "forward direction," "backward direction," "right direction," and "left direction" are indicated by arrows labeled "front," "back," "right," and "left" respectively. Both the forward and backward directions may be collectively referred to as the "front-back direction," and both the right and left directions may be collectively referred to as the "width direction."

The work vehicle **100** illustrated in this example is, for instance, a tractor, which defines and functions as an example of agricultural machinery. The technologies disclosed herein are not limited to work vehicles such as tractors and may be applied to other types of work vehicles. The work vehicle **100** is configured to attach or tow an implement and travel within a field while performing agricultural tasks appropriate to the type of implement. Additionally, the work vehicle **100** is configured to travel both within and outside the field (including on roads) with the implement raised or without an implement attached.

The work vehicle **100,** like a conventional tractor, includes a vehicle frame **102** that rotatably supports left and right front wheels **104F** and left and right rear wheels **104R.** The vehicle frame **102** includes a front frame **102A,** where the front wheels **104F** are mounted, and a transmission case **102B,** where the rear wheels **104R** are mounted. The front frame **102A** is fixed to the front portion of the transmission case **102B.** The front wheels **104F** and rear wheels **104R** may be collectively referred to as wheels **104.** Strictly speaking, the wheels **104** refer to wheel rims with tires attached. In this disclosure, the term "wheel" generally refers to the entire assembly of the "wheel rim and tire." Either or both of the front wheels **104F** and rear wheels **104R** may be replaced with a plurality of wheels (crawlers) fitted with endless tracks instead of wheeled tires.

In the example shown in FIG. **1****,** the work vehicle **100** includes a fuel cell module (FC module) **10** and a motor **70,** which are directly or indirectly supported by the front frame **102A.** The FC module **10** includes a fuel cell stack (FC stack) and functions as an onboard power generator that generates electricity from fuel, as will be described later. Hereinafter, the terms "FC module" or "FC stack" may simply be referred to as "fuel cell."

The motor **70** is electrically connected to the FC module **10.** The motor **70** converts the electric power generated by the FC module **10** into mechanical motion (power) to produce the driving force (traction) necessary for the work vehicle **100** to travel. An example of the motor **70** is an AC synchronous motor. Since the FC stack of the FC module 10 generates direct current, when the motor **70** is an AC synchronous motor, a group of electrical circuits, including an inverter device, is installed between the FC stack and the motor **70** to convert the direct current to alternating current. A portion of such electrical circuit group may be inside the FC module **10**while another portion of the electrical circuit group may be attached to the motor **70** as a motor drive circuit.

The motor **70** includes an output shaft **71** that rotates. The torque of the output shaft **71** is transmitted to the rear wheels **104R** through mechanical parts such as a transmission (gearbox) and a rear wheel differential gear device installed inside the transmission case **102B.** In other words, the power generated by the motor **70,** which defines and functions as the power source, is transmitted to the rear wheels **104R** through a power transmission system (drivetrain) **74,** including the transmission installed in the transmission case **102B.** For this reason, the "transmission case" may also be referred to as a "mission case." In four-wheel drive mode, a portion of the power of the motor **70** is also transmitted to the front wheels **104F.** The power of the motor **70** may be used not only to drive the work vehicle **100** but also to operate implements. Specifically, a power take-off (PTO) shaft **76** is provided at the rear end of the transmission case **102B,** and the torque from the output shaft **71** of the motor **70** is transmitted to the PTO shaft **76.** Implements attached to or towed by the work vehicle **100** is configured to receive power from the PTO shaft **76** to perform various work-related operations. The motor **70** and the power transmission system **74** may collectively be referred to as an electric powertrain. An example of the transmission device in the transmission case **102B** is disclosed in International Publication No. WO 2022/038860**,** the entire contents of which are incorporated herein by reference.

Thus, the work vehicle **100** disclosed herein does not include an internal combustion engine such as a diesel engine, but includes the FC module **10** and the motor **70.** Additionally, the output shaft **71** of the motor **70** is mechanically coupled to the power transmission system **74,** including the transmission in the transmission case **102B.** The motor **70** efficiently generates torque over a relatively wide range of rotational speeds compared to an internal combustion engine. However, by utilizing the power transmission system **74,** including the transmission, it becomes easier to adjust the torque and rotational speed from the motor **70** over an even wider range by performing multi-stage or continuously variable speed change operations. This configuration allows for efficient execution of not only the travel of the work vehicle **100** but also various operations using implements.

Depending on the application or size of the work vehicle **100,** some functions of the power transmission system **74** may be omitted. For example, a portion or an entirety of the transmission responsible for speed change functions may be omitted. The number and mounting position of motors **70** are also not limited to the example shown in FIG. **1****.**

The work vehicle **100** includes at least one fuel tank **50** that stores fuel to be supplied to the FC module **10.** For simplicity, FIG. **1** shows one fuel tank **50.** In some example embodiments, a plurality of fuel tanks **50** may be housed in a tank case to define a fuel tank module. The fuel tank **50** is supported by structural elements fixed to the vehicle frame **102A** described later. The FC module **10** and the fuel tank **50** are connected by piping and open/close valves, and similar components, defining an FC power generation system mounted on a vehicle. The configuration and operation of the FC power generation system will be described later.

The work vehicle **100** in the example embodiments described later includes a seat for a driver, hereinafter referred to as "a driver seat," supported by the vehicle frame **102.** The driver seat may be enclosed by a cabin supported by the vehicle frame **102.** In the example embodiments described later, the FC module **10** is positioned in front of the driver seat, and the fuel tank **50** is positioned above the driver seat. Such FC module **10** and fuel tank **50** are housed in at least one "enclosure." The "enclosure" functions as a housing, for example, and plays a role in protecting the FC module **10** and fuel tank **50** from sunlight exposure and wind and rain. Additionally, such an enclosure is designed to control the spread of fuel gas into the atmosphere and to facilitate the detection of fuel gas when fuel gas leaks from the FC module **10** or fuel tank **50.**

The FC module **10** may be housed in a front housing called a "bonnet," for example. The front housing is a portion of the "enclosure." The front housing is supported by the front portion of the vehicle frame **102** (front frame **102A**). The fuel tank **50** is housed in a tank case, as mentioned earlier. The tank case is directly or indirectly supported by the vehicle frame **102.**

### 2. <FC Power Generation System>

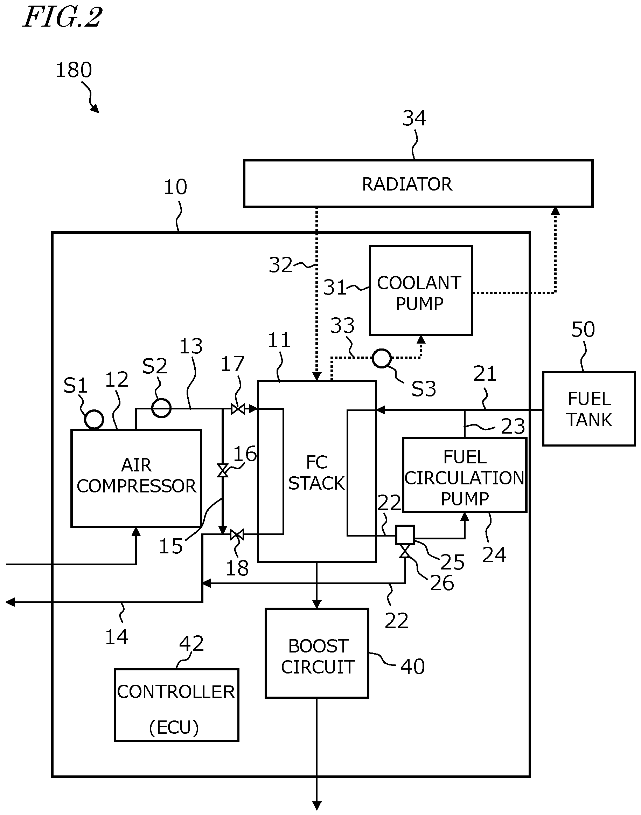

Next, referring to FIG. **2****,** a basic configuration example of the FC power generation system **180** mounted on the work vehicle **100** will be explained.

The FC power generation system **180** shown in FIG. **2** functions as an onboard power generation system in the work vehicle **100** of FIG. **1****.** The electric power generated by the FC power generation system **180** is used not only for the travel of the work vehicle **100** but also for the operation of implements towed or attached to the work vehicle **100.**

The FC power generation system **180** in the illustrated example includes the FC module **10** and at least one fuel tank **50** that stores fuel to be supplied to the FC module **10.** The FC power generation system **180** also includes a radiator device **34** for cooling the FC module **10.**

The FC module **10** includes main components such as a fuel cell stack (FC stack) **11,** an air compressor **12,** a fuel circulation pump **24,** a coolant pump **31,** a boost circuit **40,** and a control device **42.** These components are housed within the casing of the FC module **10** and are connected to each other through electrical or fluid communication.

The FC stack **11** generates electric power through an electrochemical reaction between the fuel, referred to as "anode gas" and the oxidizing gas, referred to as "cathode gas." In this example, the FC stack **11** includes polymer electrolyte fuel cells. The FC stack **11** has a stack structure in which a plurality of single cells are stacked. A single cell includes, for example, an electrolyte membrane including an ion exchange membrane, an anode electrode on one side of the electrolyte membrane, a cathode electrode on the other side of the electrolyte membrane, and a pair of separators sandwiching the anode electrode and cathode electrode on both sides. The voltage generated in a single cell is, for example, less than 1 volt. Therefore, in the FC stack **11,** for instance, more than 300 single cells are connected in series to generate a voltage of several hundred volts.

Anode gas is supplied to the anode electrode of the FC stack **11.** The anode gas is called "fuel gas" or simply "fuel." In the example embodiments of this disclosure, the anode gas (fuel) is hydrogen gas. Cathode gas is supplied to the cathode electrode. The cathode gas is an oxidizing gas such as air. The anode electrode is called the fuel electrode, and the cathode electrode is called the air electrode.

At the anode electrode, the electrochemical reaction shown in the following equation (1) occurs.

2H₂ → 4H⁺ + 4e⁻ equation (1)

At the cathode electrode, the electrochemical reaction shown in the following equation (2) occurs.

4H⁺ + 4e⁻ + O₂ → 2H₂O equation (2)

Overall, the reaction shown in the following equation (3) occurs.

2H₂ + O₂ → 2H₂O equation (3)

The anode gas after being used in the above reaction is called "anode off-gas", and the cathode gas after being used in the reaction is called "cathode off-gas."

The air compressor **12** supplies air taken from the outside as cathode gas to the cathode electrode of the FC stack **11.** The cathode gas supply system including the air compressor **12** includes a cathode gas supply pipe **13,** a cathode off-gas pipe **14,** and a bypass pipe **15.** The cathode gas supply pipe **13** flows cathode gas (air) supplied from the air compressor **12** to the cathode electrode of the FC stack **11.** The cathode off-gas pipe **14** flows cathode off-gas discharged from the FC stack **11** to the outside air. The bypass pipe **15** branches from the cathode gas supply pipe **13** downstream of the air compressor **12,** bypasses the FC stack **11,** and connects to the cathode off-gas pipe **14.** A control valve **16** is provided on the bypass pipe **15** to adjust the flow rate of cathode gas flowing through the bypass pipe **15.** A shut-off valve **17** is provided on the cathode gas supply pipe **13** to selectively block the inflow of cathode gas to the FC stack **11.** A pressure regulating valve **18** is provided on the cathode off-gas pipe **14** to adjust the back pressure of the cathode gas.

The cathode gas supply system of the FC module **10** includes a rotation speed detection sensor **S1** that detects the rotation speed of the air compressor **12** and a gas flow rate detection sensor **S2** that detects the flow rate of cathode gas flowing through the cathode gas supply pipe **13.** The control valve **16,** shut-off valve **17,** and pressure regulating valve **18** are, for example, electromagnetic valves.

The fuel circulation pump **24** supplies fuel gas (anode gas) sent from the fuel tank **50** to the anode electrode of the FC stack **11.** The anode gas supply system including the fuel circulation pump **24** includes an anode gas supply pipe **21,** an anode off-gas pipe **22,** and a circulation path **23.** The anode gas supply pipe **21** flows anode gas supplied from the fuel tank **50** to the anode electrode of the FC stack **11.** In the example embodiments of this disclosure, the fuel tank **50** is a hydrogen tank that stores high-pressure hydrogen gas.

The anode off-gas pipe **22** flows anode off-gas discharged from the FC stack **11.** The anode off-gas is led through the anode off-gas pipe **22** to a gas-liquid separator **25** in which moisture is removed. The anode off-gas with moisture removed returns to the anode gas supply pipe **21** through the circulation path **23** by the fuel circulation pump **24.** The anode off-gas circulating through the circulation path **23** can be discharged through the anode off-gas pipe **22** by opening an exhaust valve **26.** Moisture accumulated in the gas-liquid separator **25** can be discharged through the anode off-gas pipe **22** by opening the exhaust valve **26.** The exhaust valve **26** is, for example, an electromagnetic valve. In the example shown in the figure, the anode off-gas pipe **22** is connected to the cathode off-gas pipe **14.** By adopting this configuration, it is possible to improve the utilization efficiency of the anode gas by circulating the anode off-gas containing unreacted anode gas that did not contribute to the electrochemical reaction and supplying it again to the FC stack **11.**

To enhance the performance of the FC stack **11,** temperature control is important. When generating electricity through the reaction of producing water from hydrogen gas and oxygen gas, heat is also generated, necessitating cooling. FIG. **2** shows a coolant circulation system including a coolant pump **31** for the FC stack **11,** but as described later, cooling circulation systems for other electrical equipment may also be provided. Note that the air compressor **12,** fuel circulation pump **24,** and coolant pump **31** included in the FC module **10** are driven by individual built-in motors. These motors are also electrical equipment.

The coolant circulation system including the coolant pump **31** shown in FIG. **2** includes a coolant supply pipe **32,** a coolant discharge pipe **33,** a radiator device **34,** and a temperature sensor **S3.** This coolant circulation system is configured to adjust the temperature of the FC stack **11** within a predetermined range by circulating coolant through the FC stack **11.** The coolant is supplied to the FC stack **11** through the coolant supply pipe **32.** The supplied coolant flows through a coolant path between single cells and is discharged into the coolant discharge pipe **33.** The coolant discharged into the coolant discharge pipe **33** flows to the radiator device **34.** The radiator device **34** performs heat exchange between the incoming coolant and the outside air to release heat from the coolant, and then resupplies the cooled coolant to the coolant supply pipe **32.**

The coolant pump **31** is provided on either the coolant supply pipe **32** or the coolant discharge pipe **33** to pump coolant to the FC stack **11.** A coolant bypass flow path may be provided between the coolant discharge pipe **33** and the coolant supply pipe **32.** In that case, a flow dividing valve is provided at the branching point at which the coolant bypass flow path branches from the coolant discharge pipe **33.** The flow dividing valve is configured to adjust the flow rate of coolant flowing through the bypass flow path. The temperature sensor **S3** detects the temperature of the coolant flowing through the coolant discharge pipe **33.**

The coolant used to cool the FC stack **11** is circulated through the flow path by an electric coolant pump **31.** A coolant control valve may be provided downstream of the FC stack **11.** The coolant control valve adjusts the ratio of coolant flowing to the radiator device **34** and coolant bypassing the radiator device **34,** enabling more accurate control of the coolant temperature. Furthermore, by controlling the liquid delivery amount by the coolant pump, it is also possible to control the coolant temperature difference between the inlet and outlet of the FC stack **11** to be within a desired range. The temperature of the coolant in the FC stack **11** may be controlled to be around 70°C, for example, which is a temperature where the power generation efficiency of the FC stack **11** is high.

The coolant flowing through the FC stack **11** preferably has higher insulation properties compared to the coolant used to cool ordinary electrical equipment. Since voltages exceeding 300 volts can occur in the FC stack **11,** increasing the electrical resistance of the coolant allows for the suppression of current leakage through the coolant or devices such as the radiator device **34.** The electrical resistance of the coolant may decrease as the coolant is used. This is because ions dissolve into the coolant flowing through the FC stack **11.** To remove such ions from the coolant and increase insulation property, it is desirable to place an ion exchanger in the coolant flow path.

The boost circuit **40** is configured to increase the voltage output by the FC stack **11** through power generation to a desired level. The subsequent stage of the boost circuit **40** is connected to the high-voltage electrical circuit including an inverter device for motor drive. As described later, the subsequent stage of the boost circuit **40** may also be connected in parallel to the low-voltage electrical circuit via a stepdown circuit.

The control device **42** may include an electronic control unit (ECU) configured or programmed to control power generation by the FC module **10.** The control device **42** detects or estimates the operating state of the FC power generation system **180** based on signals output from various sensors. The control device **42** is configured or programmed to control power generation by the FC stack **11** by regulating the operation of the air compressor **12,** fuel circulation pump **24,** coolant pump **31,** and various valves, based on the operating state of the FC power generation system **180** and instructions output from a higher-level computer or other ECUs. The control device **42** includes, for example, a processor, a storage device, and an input/output interface.

In the following description, for simplicity, "anode gas" may be referred to as "fuel gas" or "fuel," and "anode gas supply pipe" may be referred to as "piping."

### 3. <Configuration Example of System of Work Vehicle>

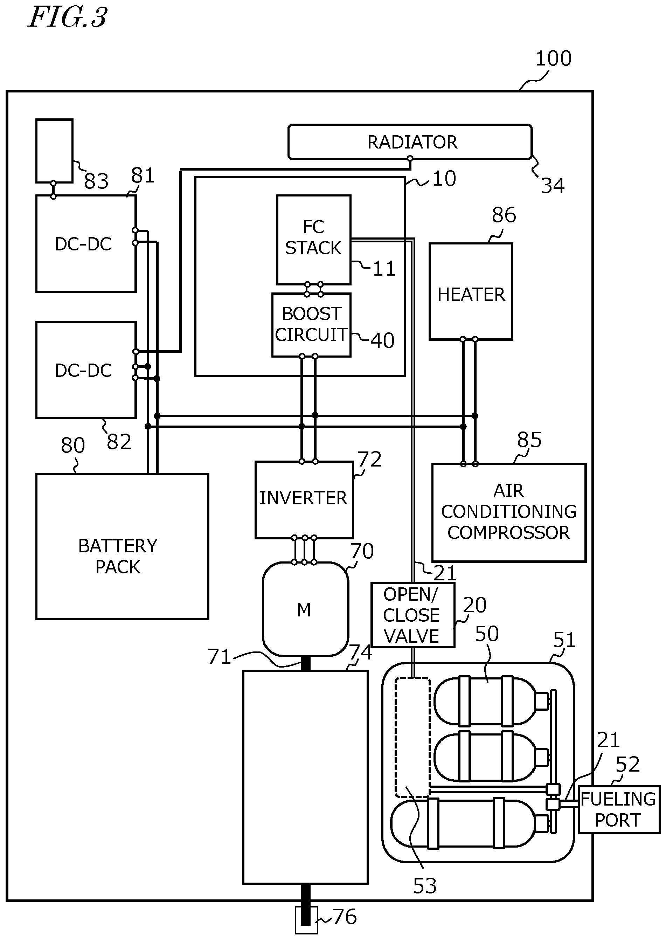

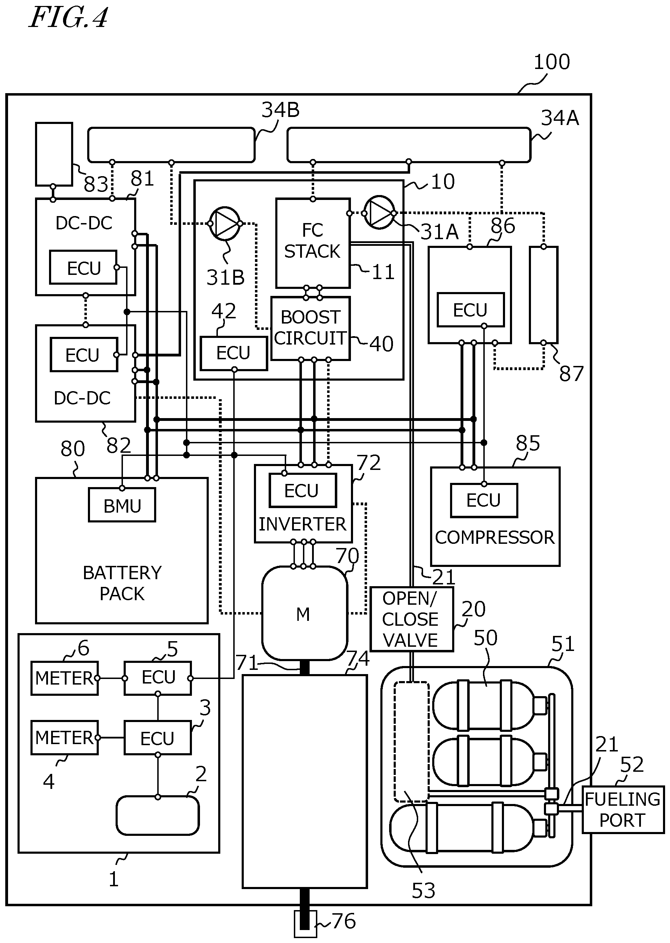

Next, referring to FIGS. **3** and **4****,** a configuration example of the system of the work vehicle **100** according to this disclosure will be described. FIG. **3** is a block diagram schematically showing an example of electrical connections and power transmission between components of the work vehicle **100** according to this disclosure. FIG. **4** is a block diagram showing a more detailed configuration than the example in FIG. **3****.** FIG. **4** schematically shows the paths of electrical signals (thin solid lines) and coolant (dotted lines) between components in the work vehicle **100.**

First, referring to FIG. **3****,** an example of the electrical connections and power transmission between components will be described. Electrical connections include both high-voltage and low-voltage systems. High-voltage electrical connections provide, for example, the power supply voltage for inverter devices. Low-voltage electrical connections provide, for example, the power supply voltage for electronic components that operate at relatively low voltages.

In the example shown in FIG. **3****,** the work vehicle **100** includes an FC module **10,** an inverter device **72,** a motor **70,** a power transmission system **74,** and a PTO shaft **76.** The DC voltage of the power generated in the FC stack **11** of the FC module **10** is boosted by the boost circuit **40** and then supplied to the inverter device **72.** The inverter device **72** converts the DC voltage into, for example, a three-phase AC voltage and supplies it to the motor **70.** The inverter device **72** includes a bridge circuit including a plurality of power transistors. The motor **70** includes a rotating rotor and a stator with a plurality of coils electrically connected to the inverter device **72.** The rotor is coupled to the output shaft **71,** for example, via a reduction gear (speed reducer) or directly. The motor **70** rotates the output shaft **71** with torque and rotational speed controlled according to the waveform of the three-phase AC voltage from the inverter device **72.**

The torque of the output shaft **71** of the motor **70** is transmitted to the power transmission system **74.** The power transmission system **74** operates with the motor **70** as the power source to drive the wheels **104R** and **104F,** as shown in FIG. **1****,** and/or the PTO shaft **76.** This power transmission system **74** may have the same or a similar structure as the power transmission system in conventional tractors including internal combustion engines such as diesel engines. By adopting a power transmission system used in agricultural tractors, for example, it is possible to reduce the design and manufacturing costs for producing an agricultural work vehicle **100** including an FC power generation system. The power transmission system **74** includes a travel power transmission mechanism that transmits power from the motor **70** to the left and right rear wheels **104R** through a clutch, transmission, and rear wheel differential device, as well as a PTO power transmission mechanism that transmits power from the motor **70** to the PTO shaft **76.** The transmission case **102B** in FIG. **1** may be divided into a front case (mission case) housing the clutch and transmission and related components, and a rear case (differential gear case) housing the rear wheel differential device and related components. The rear case may also be referred to as a rear axle case.

The work vehicle **100** includes a secondary battery (battery pack) **80** that temporarily stores electrical energy generated by the FC module **10.** An example of the battery pack **80** includes a pack of lithium-ion batteries. The battery pack **80** is configured to supply power to the inverter device **72** at the necessary timing in cooperation with the FC module **10** or independently. Various battery packs used in electric passenger vehicles may be adopted as the battery pack **80.**

The work vehicle **100** includes various electrical equipment (onboard electronic components) that operates on electricity, in addition to the motor **70** and the inverter device **72.** Examples of electrical equipment include electromagnetic valves such as open/close valves **20,** air cooling fans of the radiator device **34,** electric pumps of air conditioning compressors **85,** and temperature control devices to heat or cool the FC stack **11.** These temperature control devices include electric heaters **86.** DC-DC converters **81** and **82** to obtain appropriate power supply voltages for the operation of electrical equipment, and storage batteries **83** may also be included in the electrical equipment. Furthermore, various electronic components not shown (such as lamps, electric motors for hydraulic systems) may be included in the electrical equipment. The electrical equipment may be electronic components similar to electrical equipment installed in conventional agricultural tractors.

In the example of FIG. **3****,** the first DC-DC converter **81** is a circuit that steps down the voltage output from the boost circuit **40** of the FC module **10** to a first voltage, for example, 12 volts. The storage battery **83** is, for example, a lead-acid battery and stores electrical energy at the voltage output from the first DC-DC converter **81.** The storage battery **83** may be used as a power source for various electrical equipment such as lamps.

The work vehicle **100** shown in FIG. **3** includes not only the first DC-DC converter **81** but also a second DC-DC converter **82** as a voltage conversion circuit that steps down the high voltage output by the FC module **10.** The second DC-DC converter **82** is a circuit that steps down the voltage output from the boost circuit **40** of the FC module **10** (for example, several hundred volts) to a second voltage higher than the first voltage, for example, 24 volts. The air cooling fan of the radiator device **34,** for example, is configured to operate on the voltage output from the second DC-DC converter **82.** Note that although the radiator device **34** is described as a single component in FIG. **3****,** one work vehicle **100** may include a plurality of radiator devices **34.** Additionally, the electric pump of the air conditioning compressor **85** and the electric heater **86** are configured to operate on the voltage output from the second DC-DC converter **82.**

The work vehicle **100** shown in FIG. **3** includes a temperature control device that cools or heats the FC stack **11** included in the FC power generation system. The operation of the temperature control device or alike requires relatively large power. The relatively high 24-volt voltage output by the second DC-DC converter **82** is applied to the temperature control device. In this example embodiment, the temperature control device includes the radiator device **34** that releases heat from the coolant cooling the FC stack **11,** and the relatively high 24-volt voltage (second voltage) output by the second DC-DC converter **82** is applied to the radiator device **34.** The temperature control device includes a heater **86** that heats the FC stack **11.** The relatively high voltage output by the second DC-DC converter **82** may also be applied to the heater. The relatively high voltage output by the second DC-DC converter 82 may also be applied to air conditioning devices such as the air conditioning compressor **85**.

The work vehicle **100** may include a third voltage conversion circuit that converts the high voltage output by the FC module **10** to a third voltage higher than the second voltage. The third voltage is, for example, **48** volts. If the work vehicle **100** includes another motor in addition to the motor **70,** for example, the third voltage may be used as the power source for such other motors.

In an agricultural work vehicle including a fuel cell power generation system, in addition to the electrical equipment necessary for agricultural task, the agricultural work vehicle also includes electrical equipment necessary for the operation of fuel cell power generation, so the appropriate voltage magnitude may differ for each electrical equipment. According to the example embodiments of this disclosure, it is possible to supply voltages of appropriate magnitudes.

In the example shown in FIG. **3****,** a plurality of fuel tanks **50** are housed in a single tank case **51**. The fuel tank **50** is connected to a supplying port (fueling port) **52** through which fuel is supplied from the outside. This connection is made via piping **21** for flowing fuel gas. The fuel tank **50** is also connected to the FC module **10** via piping **21,** which is equipped with an open/close valve **20.** When hydrogen is used as the fuel gas, the piping **21** may be formed from materials with high resistance to hydrogen embrittlement, such as austenitic stainless steel like SUS316L.

As described later, a valve space **53** is provided in the tank case **51,** and various valves including a pressure reducing valve are placed in this valve space **53.** Through various valves provided in the valve space **53,** the piping **21** connects the fuel tank **50** and the FC module **10.** Fuel gas with reduced pressure by the pressure reducing valve flows through the piping **21** connecting the tank case **51** and the FC module **10.** When the fuel gas is hydrogen gas, high-pressure hydrogen gas of, for example, 35 megapascals or more may be supplied in the fuel tank **50,** but the hydrogen gas after passing through the pressure reducing valve may be reduced to about 2 atmospheres or less.

Next, refer to FIG. **4****.** In addition to what is shown in FIG. **3****,** FIG. **4** shows a plurality of ECUs that communicate within the work vehicle **100** and a user interface **1.** Communication can be executed via CAN bus wiring and other similar communication pathways, which function as paths for electrical signals (thin solid lines). FIG. **4** also shows a cooling system to perform thermal management of components. Specifically, the path of coolant (dotted line) is schematically shown.

As mentioned above, the first and second DC-DC converters **81** and **82** are configured to output voltages of different magnitudes. ECUs are also provided for these first and second DC-DC converters **81** and **82** to control each voltage conversion circuit. These ECUs, like other ECUs, are applied the relatively low first voltage output by the first DC-DC converter **81.**

In the example of FIG. **4**, the work vehicle **100** includes a cooling system in which coolant circulates via coolant pumps **31A** and **31B.** These coolant pumps **31A** and **31B** are provided inside the FC module **10.** The cooling system in this example includes a first radiator device **34A** responsible for cooling the FC stack **11** and a second radiator device **34B** to cool other electrical equipment. The cooling system includes a flow path (first flow path) where coolant flows between the FC stack **11** and the first radiator device **34A.** Furthermore, this cooling system includes a flow path (second flow path) where coolant flows between electrical equipment including the motor **70** and the second radiator device **34B.** In the example of FIG. **4****,** for instance, a heater core **87** used to heat the cabin is provided, and the coolant flowing through the first radiator device **34A** flows through the heater core **87.**

The user interface **1** includes an operation device **2** such as an accelerator pedal (or accelerator lever) and a main ECU **3** connected to the operation device **2.** The main ECU **3** is connected to a main meter **4**. The main meter **4** may display various parameters that identify the travel state or operating state of the work vehicle **100.** The user interface **1** further includes an FC system ECU **5** configured or programmed to control the FC power generation system. The FC system ECU **5** is connected to an FC meter **6.** The FC meter **6** may display various parameters that identify the operating state of the FC power generation system.

The cells of the battery pack **80** are controlled by a Battery Management Unit (BMU). The BMU includes circuits and a CPU (Central Processing Unit) that perform voltage monitoring for each cell of the battery, monitoring of overcharging and over-discharging, and cell balance control. These circuits and CPU may be mounted on a battery controller board.

### 4. <Embodiments>

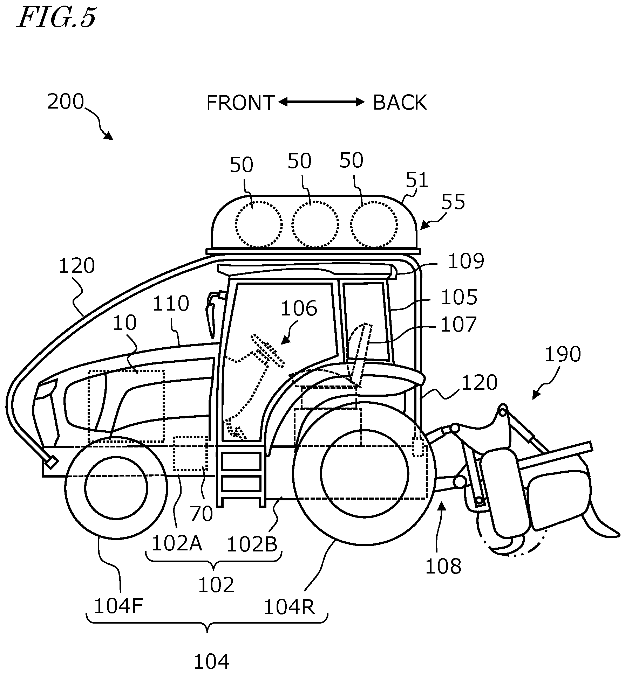

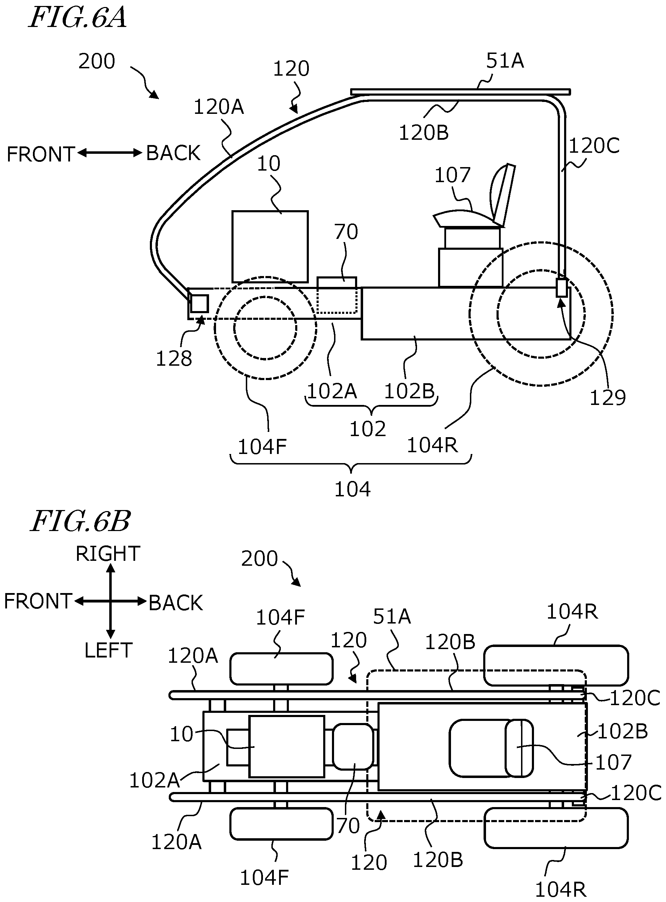

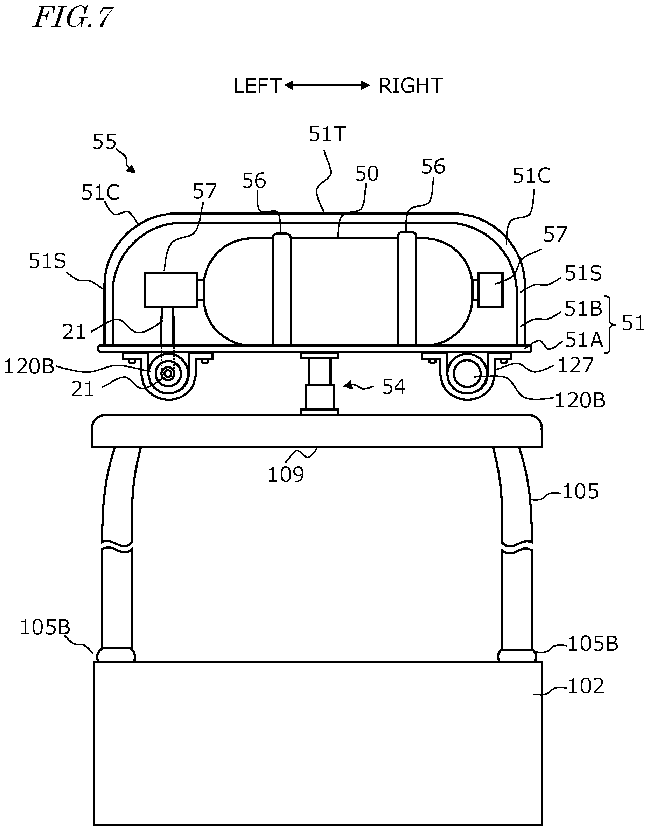

Next, referring to FIGS. **5** to **7****,** the basic configuration of the work vehicle according to the embodiments of this disclosure will be explained. FIG. **5** is a side view schematically showing a configuration example of the work vehicle **200** in this embodiment. FIG. **6A** is a side view schematically showing an example of the placement relationship of the main portions in the work vehicle **200,** and FIG. **6B** is its plan view. FIG. **7** is a diagram schematically showing a mechanism to support the fuel tank **50.**

### 4.1. Mounting frame

The work vehicle **200** in this example embodiment includes an FC module **10,** a fuel tank **50,** a motor **70,** a driver seat **107,** and a vehicle frame **102.** The work vehicle **200** has a configuration similar to the configuration of the work vehicle **100** explained with reference to FIG. **1****.**

In this example embodiment, the fuel tank **50** is supported by a mounting frame **120.** The mounting frame **120** is fixed to the vehicle frame **102** across the driver seat **107.** In the work vehicle **200** of this example embodiment, due to the configuration and function of the mounting frame **120,** the fuel tank **50** can be stably supported above the driver seat **107.** As a result, the freedom of component placement of the FC module **10,** motor **70,** and other components supported by the vehicle frame **102** is increased. Additionally, the need to significantly alter the structure of conventional engine-driven tractors is decreased. These factors contribute to reducing design and manufacturing costs.

A configuration example of the mounting frame **120** will be explained below.

In this example embodiment, the mounting frame **120** is an elongated structure, such as a pipe, fixed to the vehicle frame **102.** As shown in FIG. **6A****,** the mounting frame **120** includes a front portion **120A,** a middle portion **120B,** and a rear portion **120C.** The front portion **120A** has a curved shape and connects to the middle portion **120B.** The middle portion **120B** has a shape that extends linearly in the front-back direction and connects to the rear portion **120C.** The rear portion **120C** has a shape that extends linearly in the vertical direction. Note that the shape of the mounting frame **120** shown is just an example, and the shape of the mounting frame **120** is not limited to this example.

In this example embodiment, the vehicle frame **102** includes a front frame **102A** that rotatably supports the front wheels **104F** and a transmission case **102B** that rotatably supports the rear wheels **104R.** As shown in FIG. **6A****,** one end (front end) **128** of the mounting frame **120** is fixed to the front frame **102A.** The other end (rear end) **129** of the mounting frame **120** is fixed to the transmission case **102B.** These fixations may be done by appropriate methods such as welding or bolt joining, depending on the material of the mounting frame **120.** The mounting frame **120** may be formed from metal, synthetic resin, carbon fiber, or composite materials such as carbon fiber reinforced plastic or glass fiber reinforced plastic. The transmission case **102B** includes a rear axle case, and the rear end **129** of the mounting frame **120** may be fixed to the rear axle case. When the mounting frame **120** is formed from metal, a portion or an entirety of its surface may be covered with synthetic resin.

The mounting frame **120** is required to have sufficient rigidity to support the fuel tank **50.** When the work vehicle **200** travels on uneven ground, the fuel tank **50** supported by the mounting frame **120** may vibrate up and down or front, back, left, and right. Due to the elastic deformation of the mounting frame **120,** a portion or an entirety of the mounting frame **120** bends moderately, thereby mitigating the impact on the fuel tank **50.** To obtain this effect of mitigating impacts, it is effective for the front portion **120A** of the mounting frame **120** to have a curved shape and allow deformation within a predetermined range. A portion or an entirety of the rear portion **120C** of the mounting frame **120** may also have a curved or inclined shape.

The outer shape of the cross-section perpendicular to the elongated direction of the mounting frame **120** is, for example, circular or elliptical, but is not limited to these. The cross-sectional shape may be rectangular or other polygonal shapes. When the mounting frame **120** has an approximately cylindrical or columnar shape, its outer diameter is, for example, in the range of 10 mm or more and 100 mm or less. The inner diameter may be 0% or more and 90% or less of the outer diameter, for example.

As shown in FIG. **5****,** the work vehicle **200** includes a cabin **105** that surrounds the driver seat **107** between the vehicle frame **102** and the mounting frame **120.** The driver seat **107** is located in the rear portion of the interior of the cabin **105** (referred to as the "cabin interior"). In front of the driver seat **107,** for example, a steering wheel **106** is provided to change the direction of the front wheels **104F.** The cabin **105** includes a cabin frame that defines its skeleton. A roof **109** is provided on the upper portion of the cabin frame. The cabin frame in this example embodiment is a 4-pillar style. The cabin **105** is supported by the transmission case **102B** of the vehicle frame **102,** for example, via vibration-isolating mounts. The interface **1** explained with reference to FIG. **4** is provided inside the cabin **105.** Since the cabin **105** does not directly support the fuel tank **50,** there is no need to specially increase its strength, and a cabin that has been used in conventional tractors can be adopted.

The middle portion **120B** of the mounting frame **120** extends in the front-back direction along the roof **109** of the cabin **105** and functions as a support portion (support) for the fuel tank **50.** The fuel tank **50** is supported by the middle portion **120B** of the mounting frame **120** above the roof **109** of the cabin **105.**

Next, refer to FIG. **6B****.** In this example embodiment, the mounting frame **120** includes not one but two frames positioned on the left and right sides of the work vehicle **200.** In the plan view of FIG. **6B****,** the left and right mounting frames **120** extend parallel or substantially parallel to the front-back direction of the work vehicle **200.** The two mounting frames **120** are positioned to avoid the center area of the field of view of an operator seated in the driver seat **107** looking in the forward direction. The number of mounting frames **120** may be one, or it may be three or more. It is desirable that the mounting frame **120** is placed to avoid the center area of the field of view of an operator seated in the driver seat **107** looking in the forward direction, and to support the fuel tank **50** in a balanced manner. From this perspective, it is desirable that the number of mounting frames **120** is even, for example.

As shown in FIG. **6B****,** in a plan view looking down from directly above, individual mounting frames **120** do not need to extend directly above the driver seat. In this disclosure, the mounting frame **120** "being fixed to the vehicle frame across the driver seat" means that, as shown in FIG. **6A****,** in a side view, a portion of the mounting frame fixed to the vehicle frame extends above the driver seat **107,** or above the cabin **105,** along the front-back direction. In the example of FIG. **6B****,** the two mounting frames **120** are parallel to each other, but the spacing between the mounting frames **120** does not need to be constant along the front-back direction and may vary.

The work vehicle **200** includes a placement platform **51A** that connects the left frame **120** and the right frame **120.** The fuel tank **50** can be positioned on the placement platform **51A.** When there are a plurality of fuel tanks **50,** the plurality of fuel tanks **50** may be provided in a fuel tank module. The fuel tank module includes a tank case **51** that houses a plurality of fuel tanks **50** (FIG. 5). The left and right mounting frames **120** may be connected to each other by structural elements other than the placement platform **51A.**

A coupling device **108** is provided at the rear end of the transmission case **102B,** which defines the rear portion of the vehicle frame **102.** The coupling device **108** includes, for example, a three-point support device (referred to as a "three-point link" or "three-point hitch"), a PTO shaft, a universal joint, and a communication cable. The implement **190** can be attached to or detached from the work vehicle **200** using the coupling device **108.** The coupling device **108** can, for example, raise and lower the three-point link by a hydraulic device to change the position or posture of the implement **190.** Additionally, power can be transmitted from the work vehicle **200** to the implement **190** via the universal joint. The work vehicle **200** can execute predetermined work (agricultural task) with the implement **190** while pulling the implement **190.** The coupling device **108** may be provided on the front portion of the vehicle frame **102,** in which case the implement **190** can be connected to the front of the work vehicle **200.**

Next, referring to FIG. **7****,** an example of the configuration to support the fuel tank **50** by the mounting frame **120** will be explained.

In the example of FIG. **7****,** the placement platform **51A** of the fuel tank **50** is fixed to the middle portion **120B** of the mounting frame **120.** This fixation can be realized, for example, by a connector **127** such as a pipe mounting fitting. The fuel tank **50** is fixed to the placement platform **51A,** for example, by a fixing belt **56.** A cover **51B** is detachably or openably/closably attached to the placement platform **51A** to cover the fuel tank **50.** In this example, the tank case **51** includes the placement platform **51A** and the cover **51B.** The tank case **51** functions as part of at least one enclosure that houses the FC module **10** and the fuel tank **50.**

The cover **51B** in this example embodiment includes a curved portion **51C** that connects from the top surface portion **51T** to the surrounding side surface portion **51S.** The height of the cover **51B** is highest at the top surface portion **51T,** and the height of the curved portion **51C** decreases as it approaches the side surface portion **51S.** By adopting the cover **51B** with the shape above, the effects are obtained: reducing or preventing rain accumulation on the cover **51B** of the tank case **51,** and facilitating removal of snow accumulated on the tank case **51.** An opening may be provided in the tank case **51** to exhaust fuel gas that has leaked inside to the outside. It is preferable that a structural element such as a lid that covers the opening is provided for the opening to prevent rain and dust from entering the inside of the tank case **51.** The tank case **51** may be formed from metal, synthetic resin, carbon fiber, or composite materials such as carbon fiber reinforced plastic or glass fiber reinforced plastic.

Inside the tank case **51,** the fuel tank **50** is connected to piping **21** to flow fuel gas via valves **57** such as a pressure reducing valve and an electromagnetic valve. The piping **21** inside the tank case **51** is connected to piping **21** outside the tank case **51** through the opening provided, for example, in the placement platform **51A.** In the example of FIG. 7, a portion of the piping **21** outside the tank case **51** is disposed inside the middle portion **120B** of the mounting frame **120.** In other words, a portion of the piping **21** connecting the fuel tank **50** and the FC module **10** is located inside the mounting frame **120.** The piping **21** connecting the tank case **51** and the FC module **10** is configured to pass fuel that has been reduced in pressure by the pressure reducing valve. Wiring cables are connected to valves **57** such as electromagnetic valves. A portion or an entirety of such wiring cables may be routed through the inside of the mounting frame **120.**

The piping **21** or wiring cables may be arranged along the outer surface of the mounting frame **120** rather than inside the mounting frame **120.** However, it is preferable that they are arranged inside the mounting frame **120,** as the mounting frame **120** which has rigidity functions to protect the piping **21** and wiring cables.

The mounting frame **120** does not need to be fixed to the roof **109** of the cabin **105.** As shown in FIG. **7****,** there may be a gap between the roof **109** of the cabin **105** and the middle portion **120B** of the mounting frame **120.** When the work vehicle **200** is traveling on uneven ground, the vertical vibrations of the cabin **105** and the vertical vibrations of the tank case **51** supported by the mounting frame **120** do not need to match in amplitude and frequency. In the example of FIG. **7****,** a damper **54** is provided between the roof **109** and the placement platform **51A.** With the damper **54,** even if the work vehicle **200** undergoes significant vertical movement, collision between the placement platform **51A** and the roof **109** is suppressed.

In this example embodiment, the rear portion **120C** of the mounting frame **120,** which extends in the vertical direction, supports the placement platform **51A** (FIGS. **5****,** **6A**). When the rear portion **120C** of the mounting frame **120** is made of a material such as metal that is not easily extensible along its length, the rear portion **120C** functions to suppress the vertical movement of the placement platform **51A** relative to the vehicle frame **102.** On the other hand, when the cabin **105** is supported by the vehicle frame **102** via vibration-isolating mounts **105B,** the vibration of the cabin **105** relative to the vehicle frame **102** may show different behavior from the vibration of the placement platform **51A** relative to the vehicle frame **102.** When providing a damper **54** between the roof **109** and the placement platform **51A,** it is possible to control the coupled vibration of the cabin **105** and the fuel tank **50** by adjusting the damping ratio of the damper **54.** The type, number, and position of the damper **54** can be determined considering the size and weight of the tank case **51** and other relevant factors. In place of or in combination with the damper **54,** the cabin **105** and the placement platform **51A** may be coupled by elastic members such as springs or rubber. The damper **54** and/or elastic members may be arranged to couple the middle portion **120B** of the mounting frame **120,** rather than the placement platform **51A,** to the cabin **105.**

Unlike this example embodiment, when the fuel tank **50** is firmly fixed to the cabin **105,** for example, by welding or connecting fittings such as flange bolts, the cabin **105** and the fuel tank **50** move or vibrate integrally during travel. In contrast, in this example embodiment, some degree of freedom of movement is allowed between the cabin **105** and the fuel tank **50,** the vibration mode of the cabin **105** from the vibration mode of the fuel tank **50** can be separated. This brings about a soundproofing effect in the cabin interior, for example.

As mentioned above, when a portion of the piping **21** is provided inside the mounting frame **120,** a fueling port connected to the piping **21** may be provided on the mounting frame **120.** (Details of the fueling port **52** (FIGS. **3****,** **4**) will be described later.)

### 4.2. Fuel Tank Module

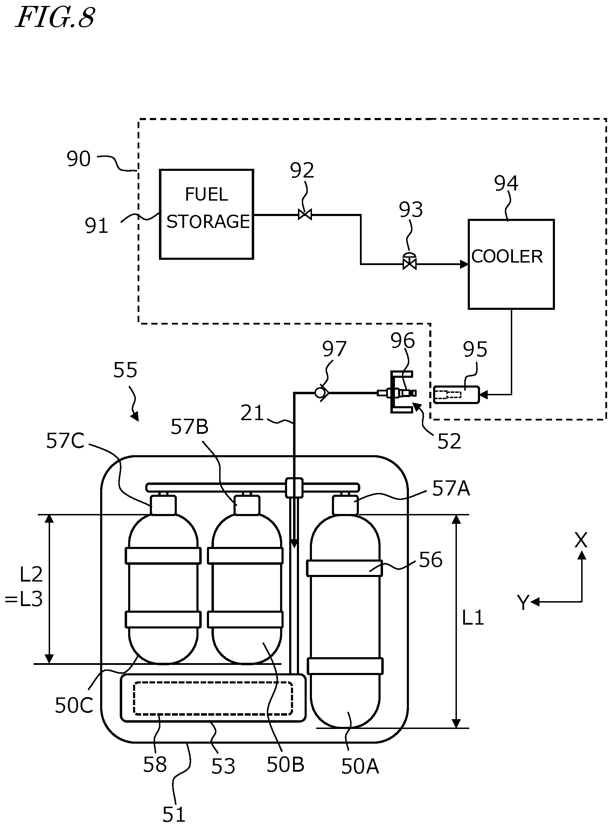

Next, referring to FIG. **8****,** a configuration example of the fuel tank module will be explained. In FIG. **8****,** X-axis and Y-axis perpendicular to each other are shown for reference.

The fuel tank module **55** in the example of FIG. 8 includes a plurality of fuel tanks **50,** a valve system **58** connected to the plurality of fuel tanks **50,** and a tank case **51** that houses the plurality of fuel tanks **50** and the valve system **58.**

The valve system **58** includes open/close valves and pressure reducing valves located inside the tank case **51.** Additionally, the valve system **58** housed in the tank case **51** may further include check valves, filters, safety valves, pressure sensors, and vent pipes. These devices included in the valve system **58** are connected by high-pressure or lowpressure piping.

The tank case **51** includes a bottom plate that extends along a plane (XY plane) defined by the X-axis direction (first direction) and the Y-axis direction (second direction), and the plurality of fuel tanks **50** are placed on this bottom plate. In this embodiment, a placement platform **51A** defines and functions as the bottom plate. The shape of the placement platform **51A** need not be a flat plate and may include ridges or grooves to increase strength. The placement platform **51A** may also include protrusions and recesses to secure the fuel tanks **50,** cover **51B,** and other parts such as valves, and/or openings.

In this example embodiment, each of the plurality of fuel tanks **50** is a high-pressure hydrogen tank having a cylindrical portion extending in the X-axis direction. The outer diameter of the cylindrical portion may be about 300 mm, for example. An example of the fuel tank **50** is a resin high-pressure hydrogen tank, which may include a multi-layer structure including, for example, a resin liner, carbon fiber reinforced plastic, and glass fiber reinforced plastic.

In this example, the plurality of fuel tanks **50** include a first fuel tank **50A** having a first length **L1** in the X-axis direction, a second fuel tank **50B** having a second length **L2** shorter than the first length **L1** in the X-axis direction, and a third fuel tank **50C** having a third length **L3** shorter than the first length **L1** in the X-axis direction. In other example embodiments of this disclosure, the third fuel tank **50C** need not be included, and additional fuel tanks may be included. The number of fuel tanks **50** in one fuel tank module **55** is not limited to three and may be any plurality. In the example of FIG. **8****,** the third length **L3** is equal to the second length **L2,** but the third length **L3** may differ from the second length **L2.**

The first fuel tank **50A,** the second fuel tank **50B,** and the third fuel tank **50C** are arranged (aligned) in the Y-axis direction perpendicular to the X-axis direction. At least a portion of the valve system **58** is positioned in a space formed between the second fuel tank **50B** and the tank case **51** inside the tank case **51.** At least another portion of the valve system **58** is positioned in a space between the third fuel tank **50C** and the tank case **51** inside the tank case **51.** In other words, the valve system **58** is positioned in a valve space **53** within the space from the second fuel tank **50B** and the third fuel tank **50C** to the tank case **51.** The sizes of **L1-L2** and **L1-L3** are determined based on the size of the space required for the valve space **53.** In this example embodiment, for example, when **L1** is about 700 mm, **L1-L2 = L1-L3** is set to 100 mm or more and 200 mm or less.

By housing the fuel tanks **50** of different lengths in the tank case **51** in this manner, it is possible to provide a space suitable for component storage within the tank case **51,** and this space can be utilized as a valve space **53.** By positioning several valves including open/close valves and pressure reducing valves, in the valve space **53,** the functionality of the fuel tank module **55** can be enhanced. Specifically, due to the function of the pressure reducing valve inside the tank case **51,** the fuel pressure can be reduced from, for example, 35 megapascals to several atmospheres before being extracted outside the tank case **51.** As a result, expensive piping for high-pressure hydrogen gas is not necessary for the piping **21** connecting the tank case **51** and the FC module **10.**

Next, referring to FIG. **8****,** an example configuration to supply fuel into the fuel tanks **50** of such a fuel tank module **55** will be explained.

In the example shown in FIG. **8****,** the fueling device **90** includes a fuel storage **91,** a shut-off valve **92,** a regulator **93,** a cooler **94,** and a dispenser nozzle **95.** The fueling device **90** may be installed at a fixed site or may function as a mobile station mounted on a vehicle such as a truck. The dispenser nozzle **95** of the fueling device **90** is connected to the cooler **94** via a flexible fuel hose. The worker performing the refueling inserts the dispenser nozzle **95** into the fueling port **52** of the work vehicle **200,** and then the process of filling the fuel (high-pressure hydrogen gas) begins.

The fueling port **52** equipped on the work vehicle **200** includes a receptacle **96** that receives fuel supply from the dispenser nozzle **95** of the fueling device **90.** The receptacle **96** is inserted into an opening hole provided at the tip of the dispenser nozzle **95** when the dispenser nozzle **95** is inserted into the fueling port **52.** The fuel injected from the dispenser nozzle **95** into the receptacle **96** is supplied to the fuel tanks **50A, 50B,** and **50C** placed inside the tank case **51** of the fuel tank module **55** through piping **21** with a check valve **97** installed midway. The fuel tanks **50A, 50B,** and **50C** are connected to the piping **21** via electromagnetic valves **57A, 57B,** and **57C,** respectively.

By selectively opening the electromagnetic valves **57A, 57B,** and **57C,** fuel from the fueling device **90** is supplied into any of the corresponding fuel tanks **50A, 50B,** and **50C.**

### 4.3. Fuel Gas Sensor

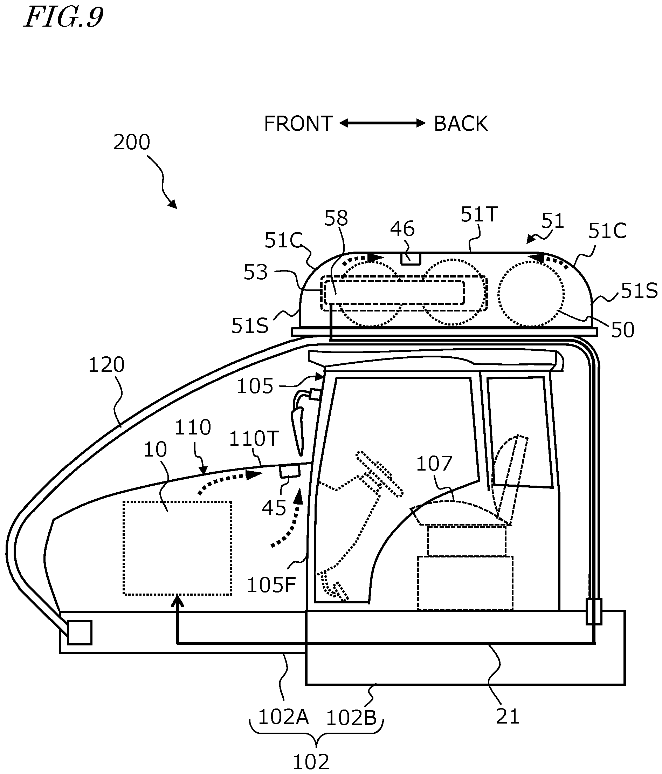

In this example embodiment, the FC module **10** and the fuel tank **50** are housed in at least one "enclosure." FIG. **9** is a diagram schematically showing the flow of fuel (hydrogen) gas that leaks inside the front housing **110** and the tank case **51,** which function as the enclosures. In FIG. **9****,** the flow of leaked fuel gas is schematically represented by dotted arrows. Such fuel gas leakage may occur from the FC module **10,** fuel tank **50,** valve system **58,** and piping **21** and related components. In the example of FIG. **9****,** the piping **21** connecting the fuel tank **50** and the FC module 10 is routed inside the mounting frame **120** and inserted into the interior of the front housing **110.**

The work vehicle **200** of this example embodiment includes at least one fuel gas sensor provided inside the enclosure. In this example embodiment, since the fuel gas is hydrogen gas, examples of the fuel gas sensor may include hydrogen gas sensors operating on various principles such as catalytic combustion type, gas thermal conductivity type, solid electrochemical type, and semiconductor type. If the fuel gas sensor detects a fuel gas leak, depending on the concentration level of the leaked fuel gas, actions such as notification/warning to the driver, fail-safe control or operation stop in the FC power generation system may be executed.

The enclosures in this example embodiment, namely the front housing **110** and the tank case **51,** each has a shape and structure to control the spread of leaked hydrogen gas into the atmosphere inside them, thus facilitating the detection of the hydrogen gas. Specifically, the upper surface **110T** of the front housing **110** has a shape that gradually or stepwise increases in height from the front end of the work vehicle **200** towards the rear direction. Hydrogen gas that leaks inside the front housing **110,** being lighter than air, flows along the upper surface **110T** of the front housing **110** towards the rear direction, approaching the front surface **105F** of the cabin **105.** Additionally, some of the fuel gas that leaks from the piping **21** inside the front housing **110,** or from the connection between the FC module **10** and the piping **21,** may rise along the front surface **105F** of the cabin **105.**

In this example embodiment, the width of the front housing **110** is designed to be narrower than the wheel spacing of the front wheels **104F.** This is different from passenger cars where the hood covers the left and right front wheels, and the width of the hood is larger than the wheel spacing of the front wheels. By making the width of the front housing **110** narrower than the wheel spacing of the front wheels **104F,** the volume of the front housing **110** can be relatively small. By making the volume of the front housing **110** small, it is possible to easily detect leaked hydrogen gas by the fuel gas sensor before it becomes diluted.

As mentioned above, in this example embodiment, the height of the tank case **51** is highest at the top surface portion **51T,** and the height of the curved portion **51C** decreases as it approaches the side portion **51S.** Therefore, hydrogen gas that leaks inside the tank case **51** tends to gather in the upper portion of the inner area rather than the peripheral area of the tank case **51.**

In this example embodiment, the tank case **51** is provided behind the front housing **110** and at a higher position than the front housing **110.** Therefore, when the front housing **110** and the tank case **51** are communicating through the piping **21,** hydrogen gas that leaks inside the front housing **110** may enter the interior of the tank case **51** through some path. Among the "enclosures" of the FC power generation system, the tank case **51** is located at the highest position. Therefore, when the enclosures form a communicating space, hydrogen gas that leaks inside the enclosures tends to gather near the tank case **51,** more specifically, near the top surface portion **51T** of the tank case **51,** which is the highest portion among the enclosures.

In the example of FIG. **9****,** the fuel gas sensor includes a first sensor **45** provided inside the front housing **110** and a second sensor **46** provided inside the tank case. The first sensor **45** is positioned in a relatively high area inside the front housing **110,** that is, an area where fuel gas accumulates. Specifically, the first sensor **45** is provided in an area inside the front housing **110** where the front surface **105F** of the cabin **105** and the upper surface **110T** of the front housing **110** are in close proximity. The second sensor **46** is provided inside the tank case **51** at a position higher than the valve system **58,** preferably on the underside of the top surface portion **51T** of the tank case **51.** The second sensor **46** is positioned higher than the first sensor **45** and functions as the fuel gas sensor placed at the highest position in the work vehicle **200.**

### 4.4. Radiator Device

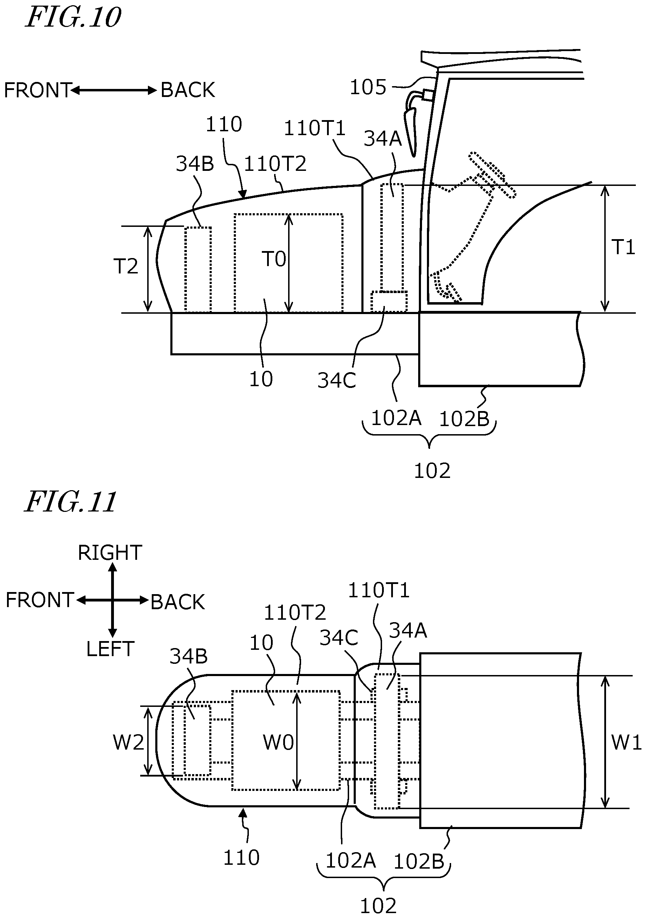

Next, referring to FIGS. **10** and **11****,** the configuration of the radiator device in this example embodiment will be explained. FIGS. **10** and **11****,** respectively, are side view and top view schematically showing an example placement of the radiator device in this embodiment.

The work vehicle **200** of this example embodiment includes a cooling system in which coolant circulates via the coolant pumps **31A** and **31B** shown in FIG. **4**, as mentioned earlier. And as shown in FIGS. **10** and **11****,** the work vehicle **200** includes a first radiator device **34A** positioned on one side (the rear side) of the FC module **10** and a second radiator device **34B** positioned on the other side (the front side) of the FC module **10.**

The first radiator device **34A** is connected to a flow path (first flow path) to cool the FC stack **11** (refer to FIG. **4****)** included in the FC module **10.** On the other hand, the second radiator device **34B** is connected to a flow path (second flow path) to cool electrical equipment, including the motor **70.** In this manner, the cooling system in the work vehicle **200** of this example embodiment includes the first radiator device **34A** to cool the FC stack **11,** and the second radiator device **34B** to cool other electrical equipment. It is desirable to enhance the ability to cool the FC stack **11** more than the ability to cool other electrical equipment. To enhance the cooling ability of radiator devices, it is necessary to expand the front surface area of the radiator devices and increase the area (core size) where the core portion of the heat exchanger contacts air. Therefore, in this example embodiment, the front surface area of the first radiator device **34A** is larger than the front surface area of the second radiator device **34B.** Specifically, as shown in FIG. **11****,** the width **W1** of the first radiator device **34A** is larger than the width **W2** of the second radiator device **34B.** Furthermore, in this example embodiment, the width **W2** of the second radiator device **34B** is smaller than the width **W0** of the FC module **10,** and the width **W1** of the first radiator device **34A** is larger than the width **W0** of the FC module **10.**

Generally, in passenger cars, the radiator device is positioned in front of the engine. Therefore, it may be adopted to position the first radiator device **34A** for cooling the FC module **10** in front of the FC module along with the second radiator device **34B.** However, in this example embodiment, by deliberately positioning the first radiator device **34A** at the rear of the FC module **10,** the following effects can be achieved.

First, the height and width of the front portion of the front housing **110** can be smaller than the height and width of the rear portion. Specifically, the front housing **110** in this example embodiment includes a first portion **110T1** positioned at the rear side and a second portion **110T2** positioned at the front side, and the height and width of the second portion **110T2** are smaller than the height and width of the first portion **110T1.** On the contrary, if the first radiator device **34A** of large size is placed in front of the FC module **10,** or if both the first and second radiator devices **34A** and **34B** are placed in front of the FC module **10,** it is necessary to expand the width of the second portion **110T2** of the front housing **110.** However, if the width of the front housing **110** is made larger than the spacing between the left and right front wheels, covering the front wheels **104F** with the front housing **110,** when an operator seated in the driver seat **107** looks forward, the front housing **110** obstructs the view and reduces visibility of the position and direction of the front wheels **104F,** thus it is difficult to steer accurately along farm roads or furrows, for example.

In contrast, according to this example embodiment, there is no need to expand the width of the second portion **110T2** of the front housing **110,** so there is no problem of the view being narrowed by an expanded front housing **110** when the operator seated in the driver seat looks forward.

For the width **W1** of the first radiator device **34A** positioned at the rear of the FC module **10,** that is, immediately in front of the cabin **105,** there is no such constraint. Even when the height and width of the first portion **110T1** located at the rear side of the front housing **110** are expanded compared to conventional examples, it has almost no effect on the forward view of the operator seated in the driver seat **107.** Therefore, the first radiator device **34A** can have a sufficient width **W1** and height **T1** by expanding the first portion **110T1** of the front housing **110** to the necessary extent. In this example embodiment, the height difference **T1-T2** between the two radiator devices **34A** and **34B** is in the range of 10 mm or more and 300 mm or less, for example, and the width difference **W1-W2** is in the range of 20 mm or more and 500 mm or less, for example.

Additionally, by positioning the two radiator devices **34A** and **34B** on opposite sides, sandwiching the FC module **10,** the problem of the two radiator devices **34A** and **34B** thermally interfering with each other is also solved.

It is desirable for the front housing **110** to have at least one opening portion that allows airflow to reach the first radiator device **34A** and/or the second radiator device **34B.** A portion of the opening portion can be realized by a gap between the first portion **110T1** and the second portion **110T2** of the front housing **110.** This gap can be provided by making at least s portion of the height and width at the front end of the first portion **110T1** of the front housing **110** larger than the height and width at the rear end of the second portion **110T2.**

It is preferable for the FC module **10** to be surrounded by a casing that includes sides and a top surface configured to guide the airflow from front to back. By adopting this configuration, it is possible to direct sufficient airflow to the first radiator device **34A** positioned at the rear of the FC module **10,** thereby the efficiency of heat exchange in the first radiator device **34A** can be enhanced.

In this example embodiment, as shown in FIG. **10****,** the first radiator device **34A** is fixed to the front frame **102A** via a support portion **34C,** and the upper end (height **T1**) of the first radiator device **34A** is at a higher position than the upper end (height **T2**) of the second radiator device **34B.** Specifically, the upper end (height **T1**) of the first radiator device **34A** is higher than the height **T0** of the FC module **10,** and the upper end (height **T2**) of the second radiator device **34B** is lower than the height **T0** of the FC module **10.** By adopting this configuration, the air introduced into the front housing **110** of the moving work vehicle **200** can flow smoothly towards the rear inside the front housing **110,** allowing not only the second radiator device **34B** but also the first radiator device **34A** to properly perform heat exchange of the coolant.

It should be noted that the lower end of the first radiator device **34A** is elevated by the support portion **34C.** By using the support portion **34C,** the first radiator device **34A** can be positioned above the motor **70** (FIG. **5**)**.**

It should also be noted that an appropriate number of opening portions or gaps are provided in the front housing **110** as necessary. These opening portions or gaps can define and function as air inlets and outlets to provide airflow.

### 4.5. Placement of Fueling Port

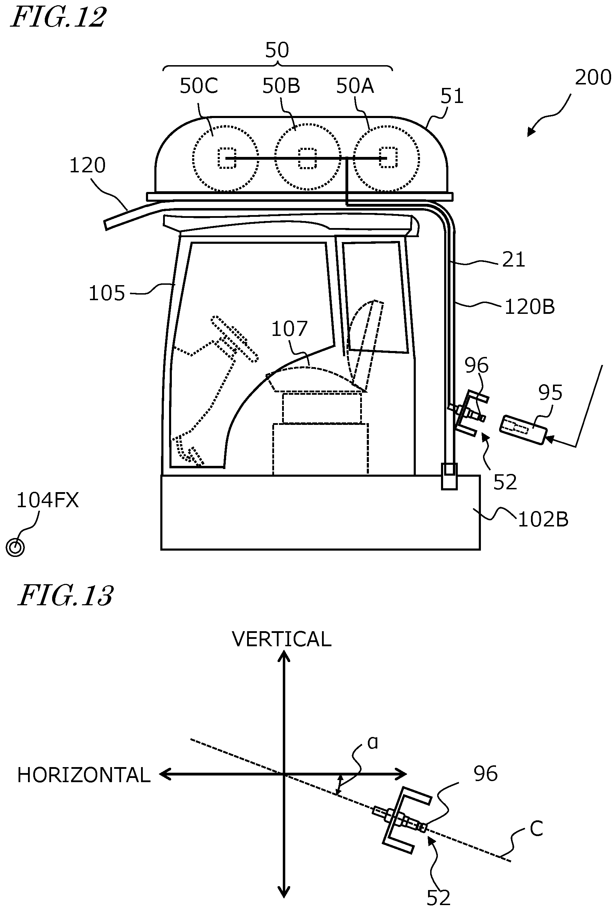

Next, referring to FIGS. **12** and **13****,** an example placement of the fueling port **52** in this example embodiment will be described. FIG. **12** is a side view schematically showing an example placement of the fueling port **52.** FIG. **13** is a side view schematically showing an example orientation of the fueling port **52.**

In the example shown in FIG. **12****,** the fueling port **52** connected to the fuel tank **50** by piping **21** is positioned higher than the axle **104FX** of the front wheels. Specifically, the fueling port **52** is provided on the rear portion **120C** of the mounting frame **120.** When the work vehicle **200** performs various agricultural tasks while traveling in a field, for example, positioning the fueling port **52** higher than the front wheel axle **104FX** may prevent muddy water from entering the fueling port **52** or its surroundings, and reduce and prevent the adhesion of mad splashed from the ground. Preferably, the fueling port **52** is equipped with a lid configured to open and close.

In the case of internal combustion engines that generate power by burning liquid fuel, the fueling port (fuel inlet) is positioned higher than the liquid fuel tank. Additionally, the distance from the liquid fuel tank to the fueling port is generally short. As a result, conventional agricultural tractors with internal combustion engines had limited freedom in the positioning and orientation of the fueling port. In contrast, when supplying high-pressure gaseous fuel to the fuel tank **50** in the FC power generation system, the fuel (hydrogen gas) can easily move through the piping **21** from the high-pressure side to the low-pressure side, regardless of the orientation of piping **21.** Therefore, the placement of the fueling port **52** in this example embodiment is not subject to the constraints of conventional fuel inlets. Consequently, as described later, the fueling port **52** can be positioned at a location that correspond to the desired effect to achieve various effects. It should be noted that the piping **21** connecting the fueling port **52** and the fuel tank **50** does not need to be routed through the mounting frame **120.**

In the illustrated example, the fueling port **52** includes a receptacle **96** that is inclined so that the internal portion is higher than the inlet. As shown in FIG. **13****,** the central axis **C** of the receptacle **96** defines an inclination angle α (0 ≤ α ≤ 90) with respect to the horizontal plane. In this case, it is assumed that the work vehicle **200** is stationary on a horizontal road surface.

As mentioned above, the increased flexibility in positioning the fueling port **52** allows it to be placed higher than the elbow position of an operator standing on the ground to perform refueling. In such cases, setting the inclination angle α shown in FIG. **13** to greater than 0 degrees facilitates the task of inserting the dispenser nozzle **95** into the fueling port **52** for refueling. The inclination angle α may be set to greater than 0 degrees regardless of the fueling port **52** position. This inclination reduces and prevents the entry of foreign matter such as water into the fueling port **52,** and if it does enter, it is easily discharged. The central axis **C** of the receptacle **96** may define an inclination angle α of, for example, 30 degrees or more and 90 degrees or less with respect to the horizontal plane. Additionally, the central axis **C** of the receptacle **96** may define an inclination angle α of 70 degrees or more and 90 degrees or less with respect to the horizontal plane. Depending on the position and height where the fueling port **52** is installed, the central axis **C** of the receptacle **96** may be parallel to the vertical direction. Thus, when the fueling port **52** is oriented obliquely downward or vertically downward relative to the horizontal direction, foreign matter is reduced and prevented from entering the fueling port **52** and is easily discharged.

It is preferable for the piping **21** to include a portion that extends obliquely upward or vertically upward from the connection portion with the receptacle **96.** The presence of such a portion helps prevent foreign matter such as water from penetrating deep inside from the fueling port **52.**

### 5. <Example>

### 5.1. Configuration of Agricultural Tractor

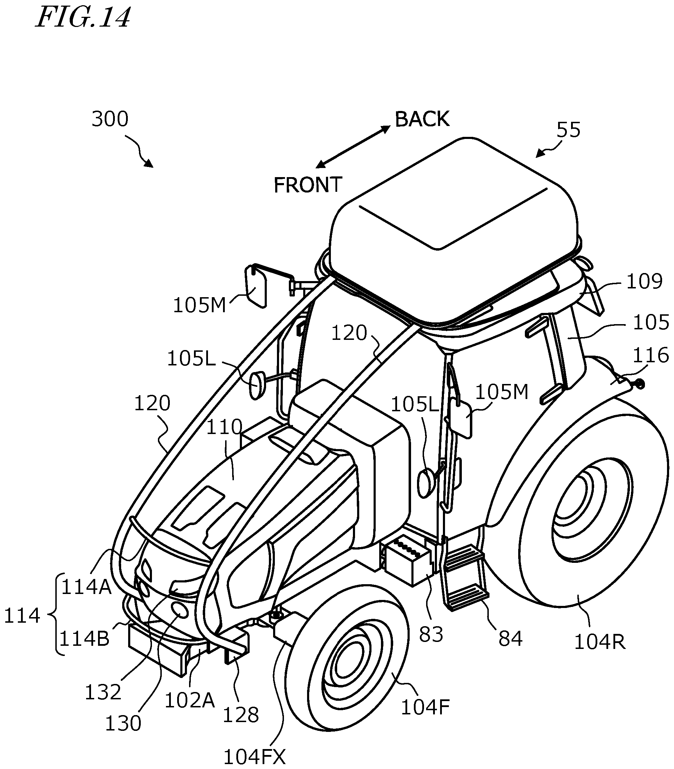

First, referring to FIGS. **14** to **18****,** the configuration of the agricultural tractor **300,** which is an example of the work vehicle of this disclosure, will be described. FIGS. **14****,** **15****,** **16****,** **17,** and **18** are perspective, side, top, front, and rear views, respectively, of the agricultural tractor **300** according to this example of the present disclosure.

The basic configuration of the agricultural tractor **300** in this example is the same as that of the work vehicle in the example embodiment previously described. The following explains the differences between the above-described example embodiment and the example. In the drawings, the same reference numerals are given to corresponding components between the above-described example embodiment and the example.

As shown in FIG. **14****,** the agricultural tractor **300** in this example includes a mounting frame **120** fixed to the vehicle frame **102** across the driver seat **107** and supporting a fuel tank module **55** including a fuel tank **50,** and a front housing **110** that covers the fuel cell module **10.** The front housing **110** is configured to be opened and closed. Specifically, this front housing **110** includes a fixed housing portion **111** that is fixed to the vehicle frame **102,** and a movable housing portion **112** that is supported to be openable and closable by the vehicle frame **102** or the fixed housing portion **111.**

In this example as well, the mounting frame **120** includes a left side frame and a right side frame. One end of each mounting frame **120** is fixed to the front frame **102A** at a connection position **128** that is in front of the axle (front axle) **104FX** of the front wheels **104F.** As shown in FIG. **14****,** in a plan view (top view) looking down from above, the front housing **110** is positioned between the left side frame and the right side frame, and protrudes forward of the connection position **128.**

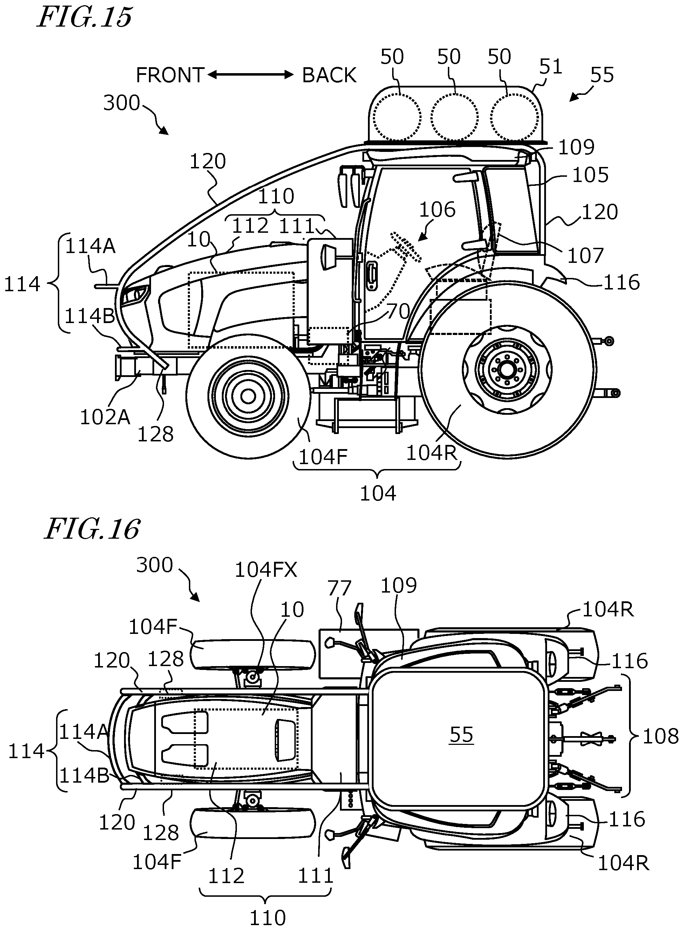

The agricultural tractor **300** of this example includes a connecting bar **114** that connects the left side frame and the right side frame. The connecting bar **114** in this example includes a plurality of bars **114A** and **114B** disposed at different heights. As shown in the plan view of FIG. **16****,** the connecting bars **114A** and **114B** are connected to the left and right frames **120** at a position in front of the connection position **128** of the mounting frame **120.** The connecting bar **114** has rigidity or mechanical strength to maintain a constant distance between the left and right mounting frames **120** even when an external force is applied to one or both of the left and right mounting frames **120.** The connecting bar **114** is preferably made of metal. The connecting bar **114** contributes to increasing the overall structural strength of the mounting frame **120.**

As shown in FIG. **14****,** the agricultural tractor **300** includes left and right back mirrors **105M** and turn signal/clearance lights **105L** attached to the cabin **105.** FIG. **14** shows a lead-acid battery **83** and a step **84** for entering and exiting the cabin **105.** Headlamps **130** and work lights **132** are provided on the front portion of the front housing **110.** A plurality of work lights are provided on the roof **109,** and various sensor devices such as laser sensors for obstacle detection may also be provided. The positions of these devices and parts that are typically equipped on agricultural tractors are not limited to the illustrated examples.

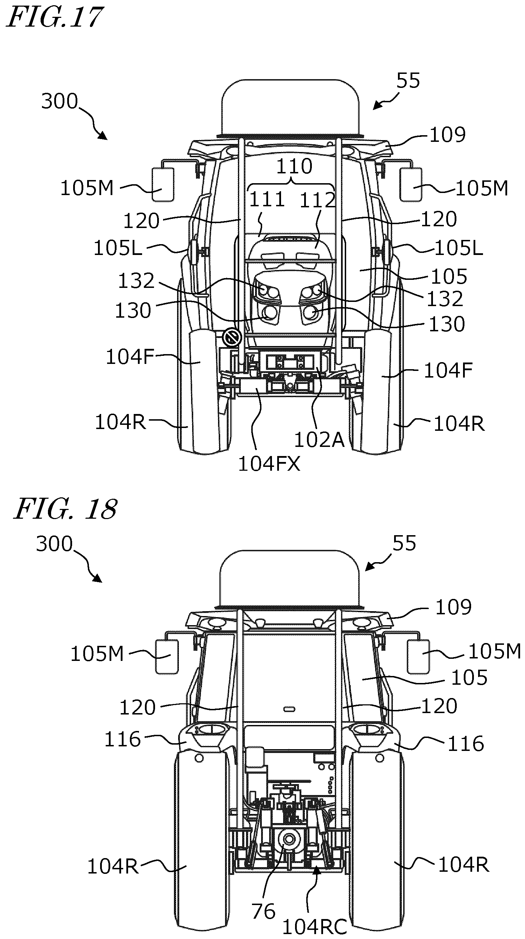

As shown in FIGS. **17** and **18****,** in the agricultural tractor **300** of this example, the fuel tank module **55** is positioned above the cabin **105,** and the left and right mounting frames **120** supporting the fuel tank module **55** are positioned across the cabin **105.** As shown in FIG. **18****,** the portion of the mounting frame **120** positioned behind the cabin **105** extends vertically between the left and right rear fenders **116.** The rear ends of each mounting frame **120** are fixed to the rear axle case (rear axle) **104RC.**

In this example, the movable housing portion **112** is configured to house the fuel cell module **10.** In contrast, the fixed housing portion **111** houses a device included in the fuel cell power generation system, specifically, the radiator device **34A** that dissipates heat from the coolant for the fuel cell. It should be noted that the mounting frame **120** has a shape that does not interfere with the front housing **110** when the position or orientation of the front housing **110** (specifically the movable housing portion **112)** changes from the closed state to the open state. The connecting bar **114** that connects the left and right mounting frames **120** is positioned outside the movable range of the movable housing portion **112.**

### 5.2. Example Configuration and Placement of Fueling Port

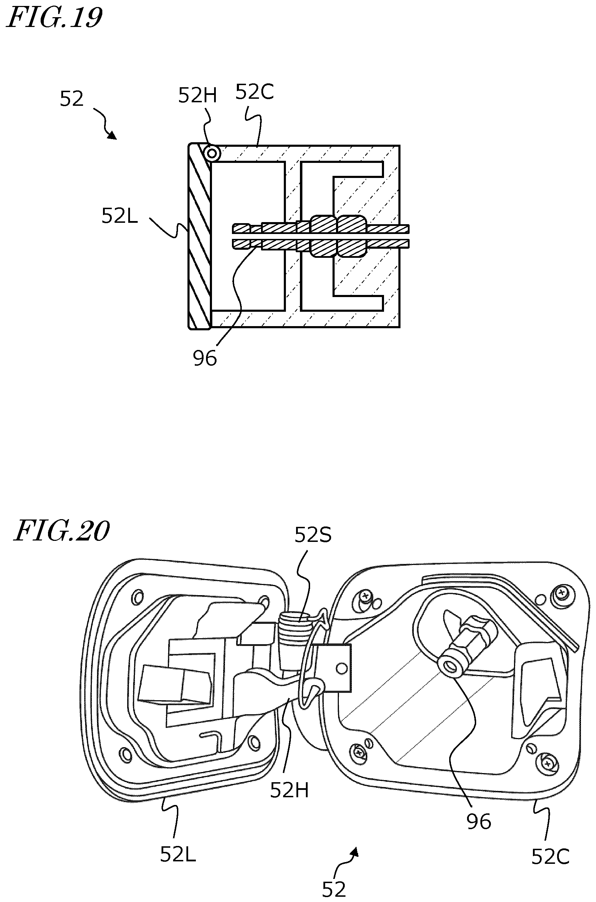

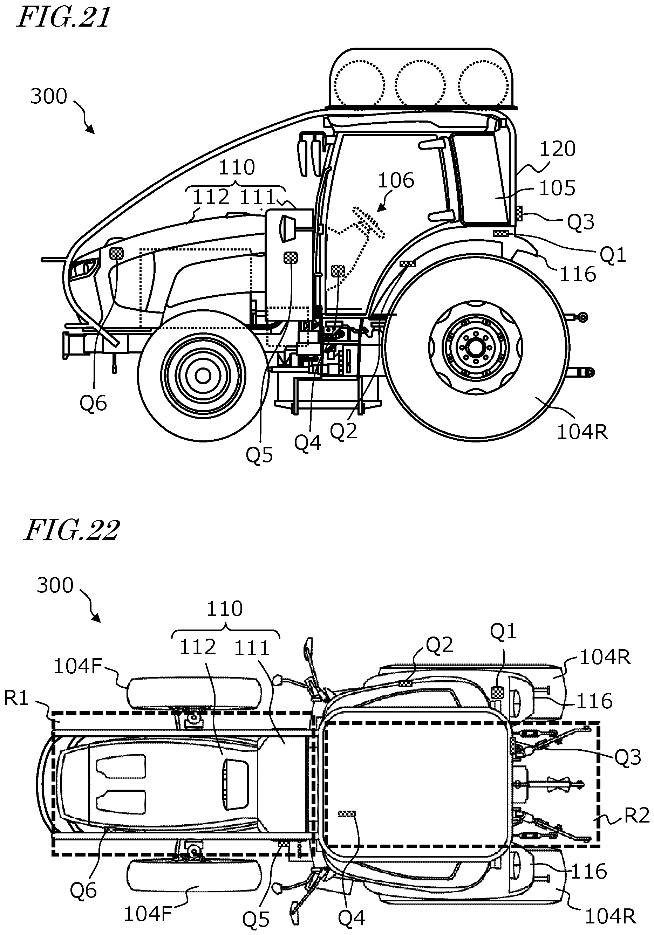

Next, referring to FIGS. **19** to **22****,** an outline of an example configuration and placement of the fueling port **52** in the agricultural tractor **300** of this example will be explained. FIG. **19** is a cross-sectional view schematically showing an example configuration of the fueling port **52.** FIG. **20** is a perspective view of the fueling port **52** in one example. FIGS. **21** and **22** are side and plan views, respectively, of the agricultural tractor **300** showing an example placement of the fueling port **52.** In FIGS. **21** and **22****,** preferred positions **Q1** to **Q6** where the fueling port **52** may be provided are schematically shown.

First, referring to FIG. **19****.** The fueling port **52** in this example includes a receptacle **96,** a casing **52C** housing the receptacle **96,** and an openable lid **52L.** The lid **52L** is rotatably supported by the casing **52C** via a hinge **52H.**

As mentioned above, the receptacle **96** receives fuel supply from the dispenser nozzle **95** of the fueling device **90** shown in FIG. **8****.** The receptacle **96** is inserted into an opening hole provided at the tip of the dispenser nozzle **95** when the dispenser nozzle **95** is inserted into the fueling port **52.** The fuel injected from the dispenser nozzle **95** shown in FIG. 8 into the receptacle **96** is supplied to the fuel tanks **50A, 50B,** and **50C** through piping.

The specific shape of the fueling port **52** is not limited to the example shown in FIG. **19****.** The fueling port **52** in this example may include a lid **52L** biased by a spring **52S** as shown in FIG. **20****,** and the inner wall surface of the casing **52C** may also have a complex shape. The direction in which the receptacle **96** extends does not need to be horizontal, as mentioned above.

Referring to FIGS. **21** and **22****,** the fueling port **52** in this example may be provided at position **Q1** on the upper portion or position **Q2** on the front portion of either of the left and right rear fenders **116** When the fueling port **52** is on the rear fender **116,** the rear fender **116,** positioned between the rear wheel **104R** and the fueling port **52,** prevents foreign matter such as mud, muddy water, soil, or sand splashed by the rear wheel **104R** from adhering to the fueling port **52.** Additionally, the rear wheels **104R** are larger in diameter than the front wheels **104F.** The rear fenders **116** are also positioned higher than the front wheels **104F.** By providing the fueling port **52** on the rear fender **116,** the fueling port **52** is positioned higher than the upper end position of the front wheel **104F.** This contributes to preventing the fueling port **52** from being soiled due to foreign matter such as mud and other substances being splashed up by the front wheels **104F.**

The rear fender **116** includes a curved surface with a relatively large area that covers the upper portion of the rear wheel **104R.** Therefore, it is possible to select a suitable position to connect the piping **21** extending from the fuel tank **50** to the fueling port **52** from various areas of the rear fender **116.** As a result, it is possible to provide the fueling port **52** at a position suitable to shorten the length of the piping **21** or reducing the curvature of the bent portion of the piping **21.**

As the position of the fueling port **52** on the rear fender **116,** for example, a position higher than the upper end of the front wheel **104F** and not higher than the upper end of the rear wheel **104R** may be selected. In other words, the height of the fueling port **52** from the ground may be greater than the outer diameter of the front wheel **104F** and not greater than the outer diameter of the rear wheel **104R.** This height is included in a suitable height range for refueling by the operator. Additionally, with the fueling port **52** fixed within such a height range on the rear fender **116,** it is easy to set the inclination angle α of the central axis **C** of the receptacle **96** in the range of, for example, 0 degrees to 70 degrees. The central axis C of the receptacle **96** does not need to be parallel to the width direction (left-right direction) of the vehicle in a plan view when viewed vertically down from above, and may be inclined towards the front-back direction of the vehicle or be parallel to the front-back direction.

The fueling port **52** may be provided in portions other than the rear fender **116.** FIG. **22** shows a rectangular region **R1** positioned between the left wheel and right wheel of the front wheels **104F** in a plan view looking vertically down from above. This rectangular region **R1** has a width narrower than the wheel spacing of the front wheels **104F.** The fueling port **52** may be placed within such a rectangular region **R1.** Additionally, FIG. **20** shows a rectangular region **R2** positioned between the left and right rear wheels **104R.** This rectangular region **R2** has a width narrower than the wheel spacing of the rear wheels **104R.** The fueling port **52** may be placed within the rectangular region **R2.**

The fueling port **52** may be provided, for example, at position **Q3** rearward of the cabin **105,** position **Q4** inside the cabin **105,** or position **Q5** in front of the cabin **105.** As shown in FIG. **20****,** in this example, the position **Q3** and the position **Q4** are located within the rectangular region **R2,** and the position **Q5** is located within the rectangular region **R1.**

When the fueling port **52** is provided at the position **Q3** rearward of the cabin **105,** it is easy to secure a wide space for the operator to perform refueling operations by detaching the implement **190** from the coupling device **108.** Especially in the area between the left and right rear wheels **104R,** the fueling port **52** can be placed at any position within a wide range in the vertical direction. For example, in the range sufficiently higher than the coupling device **108** (a range of 100 centimeters or more from the ground), there is an advantage that the refueling can be performed even when the implement **109** is connected to the coupling device **108.** When the fueling port **52** is located at such a high position, as mentioned above, setting the inclination angle α of the central axis **C** of the receptacle **96** in the range of, for example, 30 degrees to 90 degrees, preferably 70 degrees to 90 degrees, facilitates refueling. When the fueling port **52** is provided at the position **Q3,** rearward of the cabin **105,** the fueling port **52** may be fixed directly or indirectly to the back surface of the cabin **105.**

When the fueling port **52** is provided at the position **Q4** inside the cabin **105,** there is an advantage that the fueling port **52** is less likely to get soiled and is easier to keep clean because foreign matter such as mud is less likely to enter from the outside into the interior of the cabin **105.**

When the fueling port **52** is provided at the position **Q5** in front of the cabin **105,** for example, on the fixed housing portion **111,** refueling can be performed without opening the door of the cabin **105.** When the fueling port **52** is provided on the movable housing portion **112,** at least a portion of the piping **21** preferably includes a tubular component having flexibility that allows the fueling port **52** fixed to the movable housing portion **112** to move along with the opening and closing motion of the movable housing portion **112.** Such a tubular component having flexibility is not particularly necessary when providing the fueling port **52** on the fixed housing portion **111.** Since the fixed housing portion **111** includes a top surface and side surfaces, the fueling port **52** may be provided on either the top surface or a side surface of the fixed housing portion **111.** The position of the fixed housing portion **111** is not limited to the example shown in FIG. **19****.**

The fueling port **52** may be disposed at the position **Q6** in the internal space of the front housing **110.** In this case, since the fueling port **52** is exposed only when the movable housing portion **112** is in the open state, this enables a more effective prevention of foreign matter such as mud from adhering to the fueling port **52** during travel or work. Inside the front housing **110,** the fueling port **52** can be provided at an appropriate position according to the arrangement of parts. The manner of opening and closing the movable housing portion **112** is not limited to the example in FIG. **19****.** The hinge component defining the rotation axis may be positioned in front of the movable housing portion **112.**

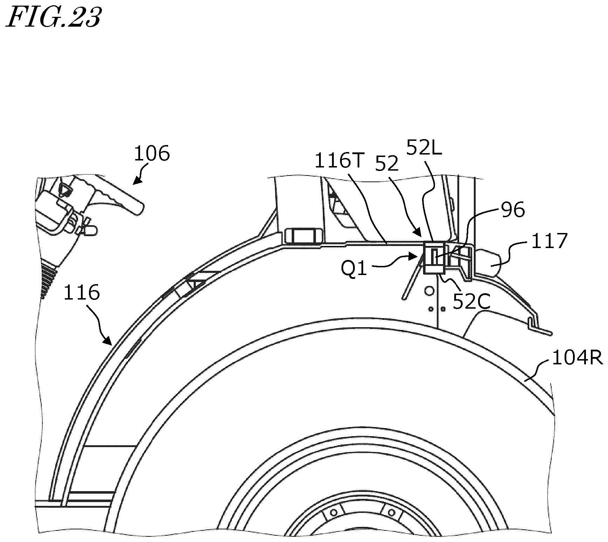

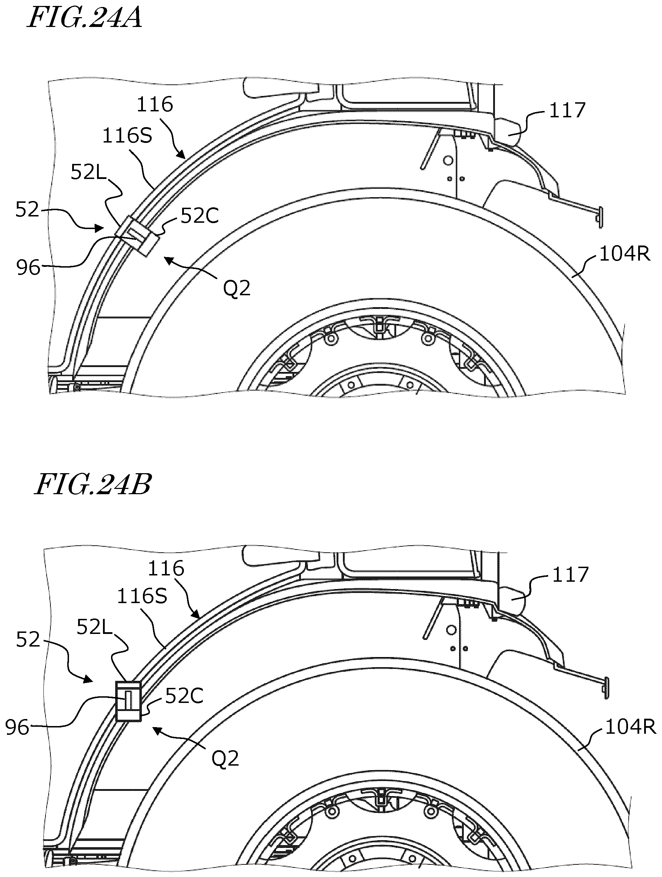

Next, referring to FIGS. **23** to **24B****,** several examples of the placement of the fueling port **52** provided on the rear fender **116** will be specifically explained. FIG. **23** is a cross-sectional view of the rear fender **116** showing one example of the placement of the fueling port **52** in this example. FIGS. **24A** and **24B** are cross-sectional views of the rear fender **116** showing another example of the placement of the fueling port **52** in this example. In these drawings, the depiction of the piping to connect the fueling port **52** to the fuel tank **50** is omitted.

In the example shown in FIG. **23****,** the fueling port **52** is provided at the position **Q1** on the upper portion of the rear fender **116.** Specifically, the position **Q1** is adjacent to the rear end portion of the top surface **116T** of the rear fender **116** where lamps such as brake lamps **117** are located. External operation switches such as a three-point link operation switch and a Monroe operation switch may be placed on such a rear end portion of the rear fender **116.** Since the external operation switches are in a position that is easy for the operator to work with, placing the fueling port **52** nearby similarly has the effect of facilitating refueling.

In the example of FIG. **23****,** the receptacle **96** extends upward. In this case, the dispenser nozzle **95** in FIG. **8** is inserted downward from directly above the fueling port **52.** Note that the direction in which the central axis of the receptacle **96** extends does not need to be parallel to the vertical direction as shown in FIG. **23****.**

An opening is provided at the position **Q1** on the top surface **116T** of the rear fender **116,** and the casing **52C** of the fueling port **52** is fitted into that opening. It is preferable for the surface shape of the lid **52L** of the fueling port **52,** when in the closed state, to aligns with the surface shape of the top surface **116T** of the rear fender **116.** However, a step may be provided between the lid **52L** and the top surface **116T.**

Between the rear fender **116** and the rear wheel **104R,** there is, for example, a gap of 5 centimeters or more, defining a space capable of accommodating the fueling port **52** and piping. In this example, this space has a size that can accommodate the casing **52C** of the fueling port **52.** In the example shown in FIG. **23****,** the distance from the rear wheel **104R** to the top surface **116T** of the rear fender **116** is relatively large in the upper portion of the rear fender **116.** Therefore, when providing the fueling port **52** on the upper portion of the rear fender **116,** the effect that the routing of piping and other components is relatively facilitated is achieved.

The fueling port **52** may be provided on portions other than the upper portion of the top surface **116T** of the rear fender **116.** In the examples shown in FIGS. **24A** and **24B****,** the fueling port **52** is provided at the position **Q2** on the front portion of the rear fender **116.** In the example of FIG. **24A****,** the casing **52C** of the fueling port **52** is inclined as a whole to match the inclination of the top surface **116T** of the rear fender **116** obliquely downward and frontward. In this case, the surface shape of the lid **52L** of the fueling port **52** in the closed state is easily matched with the surface shape of the top surface **116T** of the rear fender **116.** In contrast, in the example of FIG. **24B****,** the orientation of the casing **52C** of the fueling port **52** is the same as that the orientation of the casing **52C** in FIG. **23****.** In the example of FIG. **24B****,** a portion of the casing **52C** is exposed from the top surface **116T** of the rear fender **116.** However, a portion of the top surface **116T** of the rear fender **116** may be shaped or processed to cover a portion or entirety of the casing **52C** of the fueling port **52.** From the viewpoint of protecting the fueling port **52,** it is preferable that portions other than the lid **52L** of the fueling port **52** are concealed by the rear fender **116.**

Thus, even when the fueling port **52** is provided on portions other than the upper portion of the top surface **116T** of the rear fender **116,** it is possible to effectively utilize the space between the rear fender **116** and the rear wheel **104R.** Additionally, since this space allows the entire fueling port **52** to be accommodated in various orientations, the orientation of the central axis of the receptacle **96** can be selected from a wide range.

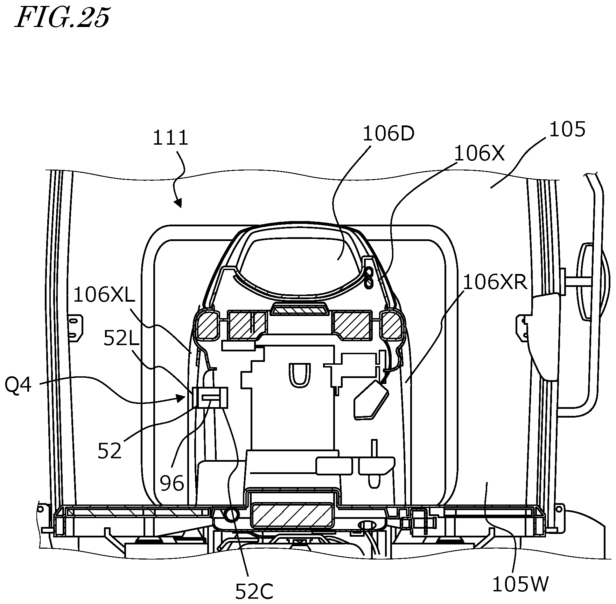

Next, referring to FIG. **25****,** a specific example of the placement of the fueling port **52** provided inside the cabin **105** will be explained. FIG. **25** is a cross-sectional view showing another example of the placement of the fueling port **52** in this example. This cross-sectional view is a partial cross-sectional view when the handle stay cover (handle column case) **106X** is cut by a plane crossing position **Q4.** The handle stay cover **106X** is provided with a display **106D** to display various information including vehicle speed, and other operation levers. Note that in FIG. **25****,** the steering wheel is not shown for clarity.

In this example, the fueling port **52** is provided at the position **Q4** on one (side surface **106XL)** of the side surfaces **106XL** and **106XR** on both sides of the handle stay cover **106X** (refer to FIG. **21****).** An opening is provided on the side surface **106XL** of the handle stay cover **106X,** and the casing **52C** of the fueling port **52** is placed to cover this opening. The central axis of the receptacle **96** shown is parallel to the horizontal direction (width direction of the vehicle), but as mentioned above, it may be inclined with respect to the horizontal direction (refer to FIG. **13****).** In this example, the surface shape of the lid **52L** of the fueling port **52** in the closed state aligns with the surface shape of the handle stay cover **106X.** However, there may be a step between the lid **52L** and the handle stay cover **106X.**

It is preferable that the fueling port **52** is provided in an area that does not interfere with the operator's entry and exit from the cabin **105,** and also does not interfere with steering or switch operations.

In the example shown in FIG. **23****,** when an operator seated in the driver seat inside the cabin **105** looks forward, the fixed housing portion **111** is positioned beyond the handle stay cover **106X.** The cabin **105** has glass **105W** on all four sides surrounding the driver seat. Glass **105W** is positioned between the inside of the cabin **105** and the fixed housing portion **111.** As shown in FIG. **21****,** the position **Q4** of the fueling port **52** is located lower than steering wheel, an operator standing on the ground may easily refuel from outside the cabin **105.** Additionally, when the fueling port **52** is provided on the side of the handle stay cover **106X,** it is less likely to interfere with entering or exiting the cabin **105** even when the dispenser nozzle **95** is inserted into the fueling port **52.** Therefore, there is an advantage that the operator can easily perform necessary tasks inside and outside the cabin **105** even during refueling.

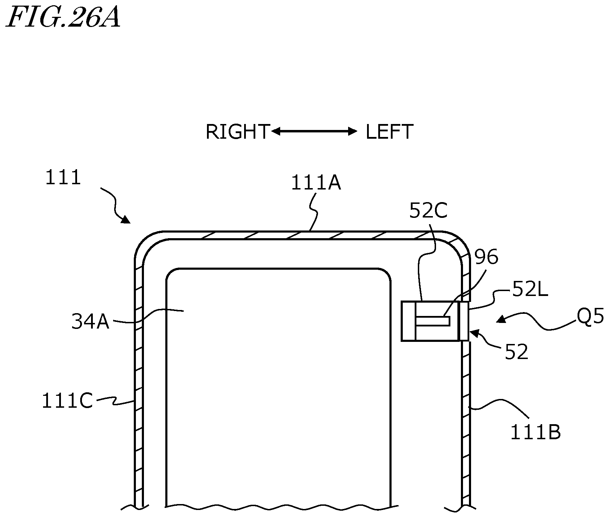

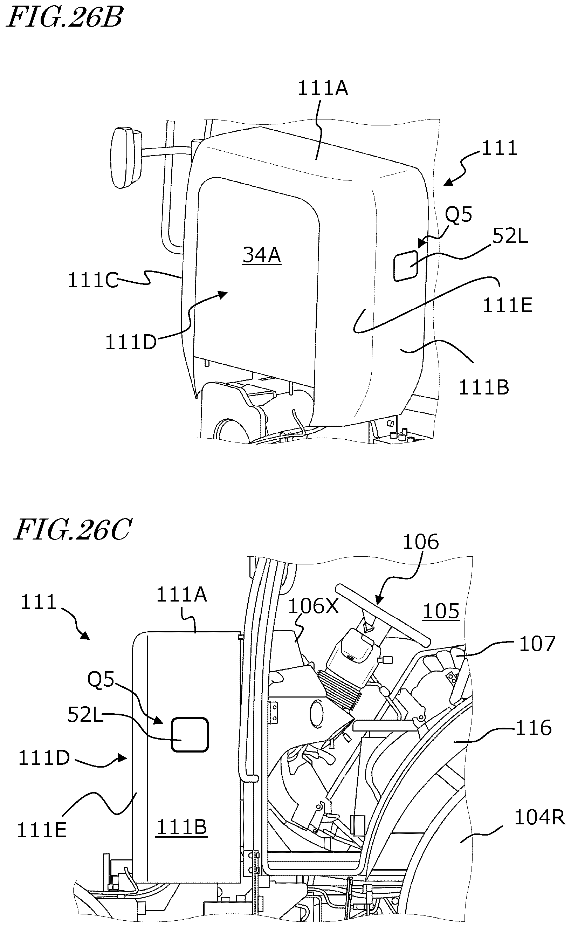

Next, referring to FIGS. **26A to 26C****,** an example of the placement of the fueling port **52** provided on the fixed housing portion **111** of the front housing **110** will be explained. FIG. **26A** is a schematic cross-sectional view of the fixed housing portion showing such a fueling port **52.** FIGS. **26B** and **26C** are perspective and side views, respectively, of the fixed housing portion **111** showing an example of the placement of the fueling port **52** in this example.

In this example, the fixed housing portion **111** houses a component (in this example, the radiator device **34A)** that has a size exceeding a capacity of the movable housing portion **112.** The fixed housing portion **111** is positioned behind the movable housing portion **112.** The fixed housing portion **111** in this example includes a top portion **111A,** a pair of side portions **111B** and **111C,** and a front wall **111E.** The front wall **111E** is located on the side of the movable housing portion **112** and includes an opening portion **111D** that communicates with the interior of the movable housing portion **112** in the closed state. Through this opening portion **111D,** components placed inside the fixed housing portion **111** and components placed inside the movable housing portion **112** can be connected by piping, coolant flow paths, electrical cables, and other similar connectors. The front wall **111E** faces the rear end of the movable housing portion **112** in the closed state. Therefore, the opening portion **111D** of the fixed housing portion **111** is blocked by the movable housing portion **112** in the closed state.

In this example, an opening is provided at the position **Q5** on the side portion **111B** of the fixed housing portion **111,** and the lid **52L** of the fueling port **52** is positioned to cover this opening. The position **Q5** of the fueling port **52** may be on the top portion **111A,** the other side portion **111C,** or the front wall **111E** of the fixed housing portion **111.** When the fueling port **52** is provided on the front wall **111E,** refueling can be performed by setting the movable housing portion **112** to the "open state". In that case, the lid **52L** is not required.

It should be noted that, as shown in FIG. **26A****,** the central axis of the receptacle **96** is parallel to the horizontal direction, but the central axis of the receptacle **96** may be inclined from the horizontal direction.

As shown in FIGS. **26B** and **26C****,** since the position **Q5** is close to the cabin **105,** it is easy to provide piping connecting the fuel tank **50** positioned above the cabin **105** and the fueling port **52** on the side or inside of the cabin **105.**

The casing **52C** of the fueling port **52** is accommodated in an area that does not interfere with various parts provided inside the fixed housing portion **111.** The casing **52C** has a shape, size, and orientation that fits within the space formed between a plurality of components accommodated in the fixed housing portion **111,** or between these components and the top portion **111A,** the pair of side portions **111B** and **111C,** and the front wall **111E** of the fixed housing portion **111.**

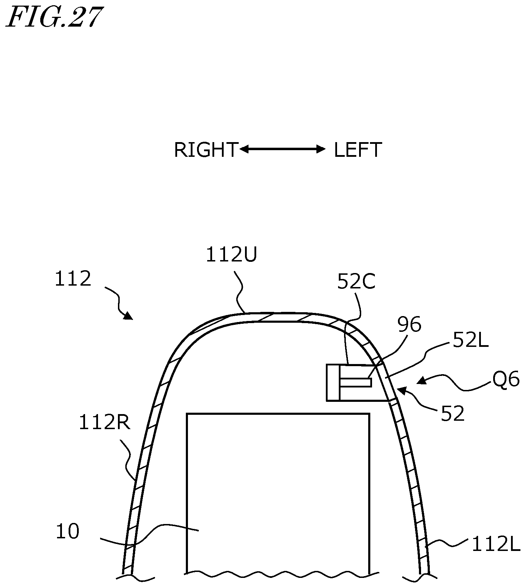

Next, referring to FIG. **27****,** an example of the placement of the fueling port **52** provided on the movable housing portion **112** of the front housing **110** will be explained in detail. FIG. **27** is a cross-sectional view of the movable housing portion **112** specifically showing an example of such a fueling port **52** placement.

In this example, the fueling port **52** is positioned in a space formed and surrounded on three sides by the side surfaces **112L, 112R,** and the top surface **112U** of the movable housing portion **112,** with the lid **52L** covering an opening provided at the position **Q6** on the side surface **112L.**

As shown in FIG. **27****,** when the surface of the side surface **112L** of the movable housing portion **112** is curved, the surface of the lid **52L** of the fueling port **52** may also be curved. The fueling port **52** may be fixed to the movable housing portion **112,** or it may be fixed to other components housed in the movable housing portion **112** or to the front frame **102A.** As shown in FIG. **27****,** the central axis of the receptacle **96** is parallel to the horizontal direction, but the central axis of the receptacle **96** may be inclined from the horizontal direction.

The casing **52C** of the fueling port **52** is accommodated in an area that does not interfere with various components provided inside the movable housing portion **112.** The casing **52C** has a shape, size, and orientation that fits within the space formed between a plurality of components housed in the movable housing portion **112,** or between these parts and the side surfaces **112L, 112R,** and the top surface **112U** of the movable housing portion **112.**

As described above, this disclosure includes work vehicles described in the following items.

### [Item 1]

A work vehicle comprising:
a fuel cell;
at least one fuel tank to store fuel to be supplied to the fuel cell;
a motor connected to the fuel cell;
a vehicle frame that supports the fuel cell, the at least one fuel tank, and the motor, and rotatably supports front wheels and rear wheels; and
a fueling port connected to the at least one fuel tank via piping; wherein
the fueling port is provided at a position higher than an axle of the front wheels.

### [Item 2]

The work vehicle according to item 1, wherein
the vehicle frame includes a left rear fender and a right rear fender that cover at least a portion of each of the rear wheels; and
the fueling port is provided on an upper portion of either the left rear fender or the right rear fender.

### [Item 3]

The work vehicle according to item 1, wherein
the vehicle frame includes a left rear fender and a right rear fender that cover at least a portion of each of the rear wheels, and
the fueling port is provided on a front portion of either the left rear fender or the right rear fender.

[Item 4]

The work vehicle according to item 1, further comprising a driver seat supported by the vehicle frame and a cabin surrounding the driver seat; wherein
the fueling port is provided rearward of the cabin.

### [Item 5]

The work vehicle according to item 1, further comprising a driver seat supported by the vehicle frame and a cabin surrounding the driver seat; wherein
the fueling port is provided inside the cabin.

### [Item 6]

The work vehicle according to item 1, further comprising a driver seat supported by the vehicle frame and a cabin surrounding the driver seat; wherein
the fueling port is provided in front of the cabin.

### [Item 7]

The work vehicle according to item 6, further comprising a front housing covering the fuel cell, the front housing being supported by a front portion of the vehicle frame wherein
the fueling port is provided on the front housing.

### [Item 8]

The work vehicle according to item 6, further comprising a front housing covering the fuel cell; wherein
the front housing is supported by a front portion of the vehicle frame; wherein
the fueling port is provided in an internal space of the front housing.

### [Item 9]

The work vehicle according to item 1, wherein, in a plan view when viewed vertically down from above, the fueling port is located within a rectangular region located between the left and right wheels of the front wheels, the rectangular region having a width narrower than the wheel spacing of the front wheels.

### [Item 10]

The work vehicle according to item 1, wherein, in a plan view when viewed vertically down from above, the fueling port is located within a rectangular region located between the left and right wheels of the rear wheels, the rectangular region having a width narrower than the wheel spacing of the rear wheels.

### [Item 11]

The work vehicle according to any one of items 1 to 10, wherein the at least one fuel tank is provided at a position higher than the fueling port.

### [Item 12]

The work vehicle according to any one of items 1 to 11, wherein the fueling port includes a receptacle that is inclined so that an internal portion of the receptacle is higher than an inlet of the receptacle.

### [Item 13]

The work vehicle according to any one of items 1 to 12,
wherein the work vehicle is an agricultural machine.

### [Item 14]

The work vehicle according to item 13, further comprising a power take-off shaft driven by the motor.

### [Item 15]

A work vehicle comprising:
a fuel cell;
at least one fuel tank to store fuel to be supplied to the fuel cell;
a motor connected to the fuel cell;
a vehicle frame that supports the fuel cell, the at least one fuel tank, and the motor, and rotatably supports front wheels and rear wheels; and
a fueling port connected to the at least one fuel tank via piping; wherein
the fueling port includes a receptacle that is inclined so that from an internal portion is higher than an inlet.

### [Item 16]

The work vehicle according to item 15, wherein, when the work vehicle is stationary on a horizontal road surface, a central axis of the receptacle defines an inclination angle of 30 degrees or more and 90 degrees or less with respect to a horizontal plane.

### [Item 17]

The work vehicle according to item 16, wherein, when the work vehicle is stationary on the horizontal road surface, the central axis of the receptacle defines the inclination angle of 70 degrees or more and 90 degrees or less with respect to the horizontal plane.

### [Item 18]

The work vehicle according to item 16, wherein the piping includes a portion extending obliquely upward from a connection portion with the receptacle.

### [Item 19]

The work vehicle according to item 16, wherein the piping includes a portion extending vertically upward from a connection portion with the receptacle.

### [Item 20]

The work vehicle according to any one of items 15 to 19, wherein the at least one fuel tank is provided at a position higher than the fueling port.

### [Item 21]

The work vehicle according to any one of items 15 to 19, wherein
the vehicle frame includes a left rear fender and a right rear fender that cover at least a portion of each of the rear wheels; and
the fueling port is provided on either the left rear fender or the right rear fender.

### [Item 22]

The work vehicle according to any one of items 15 to 19, wherein
the vehicle frame includes a left rear fender and a right rear fender that cover at least a portion of each of the rear wheels, and
the fueling port is positioned between the left rear fender and the right rear fender.

### [Item 23]

The work vehicle according to any one of items 15 to 19, further comprising a driver seat supported by the vehicle frame and a cabin surrounding the driver seat; wherein
the fueling port is provided rearward of the cabin.

### [Item 24]

The work vehicle according to any one of items 15 to 19, further comprising a driver seat supported by the vehicle frame and a cabin surrounding the driver seat; wherein
the fueling port is provided inside the cabin.

### [Item 25]

The work vehicle according to any one of items 15 to 19, further comprising a driver seat supported by the vehicle frame and a cabin surrounding the driver seat,
wherein the fueling port is provided in front of the cabin.

### [Item 26]

The work vehicle according to item 25, further comprising a front housing to house the fuel cell; wherein
the front housing is supported by a front portion of the vehicle frame;
the fueling port is provided on the front housing.

### [Item 27]

The work vehicle according to item 25, further comprising a front housing to house the fuel cell; wherein
the front housing is supported by a front portion of the vehicle frame;
the fueling port is located in an internal space of the front housing.

### [Item 28]

The work vehicle according to any one of items 15 to 19, wherein the work vehicle is an agricultural machine.

### [Item 29]

The work vehicle according to item 28, further comprising a power take-off shaft driven by the motor.

### INDUSTRIAL APPLICABILITY

The technology of this disclosure can be applied to work vehicles such as agricultural tractors, riding field management vehicles, and vegetable transplanting machines.

### REFERENCE SIGNS LIST

**10:** Fuel cell module, **11:** FC stack, **34:** Radiator device, **40:** Boost circuit, **50:** Fuel tank, **51:** Tank case, **70:** Motor, **71:** Output shaft, **72:** Inverter device, **74:** Power transmission system, **76:** Power take-off (PTO) shaft, **80:** Battery pack, **81:** First DC-DC converter, **82:** Second DC-DC converter, **83:** Storage battery, **85:** Air conditioning compressor, **86:** Heater, **100:** Work vehicle, **102:** Vehicle frame, **102A:** Front frame, **102B:** Transmission case, **104:** Wheel, **104F:** Front wheel, **104R:** Rear wheel, **107:** Driver seat, **120:** Mounting frame

## Claims

1. A work vehicle comprising:
a fuel cell;
at least one fuel tank to store fuel to be supplied to the fuel cell;
a motor connected to the fuel cell;
a vehicle frame that supports the fuel cell, the at least one fuel tank, and the motor, and rotatably supports front wheels and rear wheels; and
a fueling port connected to the at least one fuel tank via piping; wherein
the fueling port is provided at a position higher than an axle of the front wheels.

2. The work vehicle according to claim 1, wherein
the vehicle frame includes a left rear fender and a right rear fender that cover at least a portion of each of the rear wheels; and
the fueling port is provided on an upper portion of either the left rear fender or the right rear fender.

3. The work vehicle according to claim 1, wherein
the vehicle frame includes a left rear fender and a right rear fender that cover at least a portion of each of the rear wheels, and
the fueling port is provided on a front portion of either the left rear fender or the right rear fender.

4. The work vehicle according to claim 1, further comprising a driver seat supported by the vehicle frame and a cabin surrounding the driver seat; wherein
the fueling port is provided rearward of the cabin.

5. The work vehicle according to claim 1, further comprising a driver seat supported by the vehicle frame and a cabin surrounding the driver seat; wherein
the fueling port is provided inside the cabin.

6. The work vehicle according to claim 1, further comprising a driver seat supported by the vehicle frame and a cabin surrounding the driver seat; wherein
the fueling port is provided in front of the cabin.

7. The work vehicle according to claim 6, further comprising a front housing covering the fuel cell, the front housing being supported by a front portion of the vehicle frame; wherein
the fueling port is provided on the front housing.

8. The work vehicle according to claim 6, further comprising a front housing covering the fuel cell; wherein
the front housing is supported by a front portion of the vehicle frame; wherein
the fueling port is provided in an internal space of the front housing.

9. The work vehicle according to claim 1, wherein, in a plan view when viewed vertically down from above, the fueling port is located within a rectangular region located between the left and right wheels of the front wheels, the rectangular region having a width narrower than the wheel spacing of the front wheels.

10. The work vehicle according to claim 1, wherein, in a plan view when viewed vertically down from above, the fueling port is located within a rectangular region located between the left and right wheels of the rear wheels, the rectangular region having a width narrower than the wheel spacing of the rear wheels.

11. The work vehicle according to any one of claims 1 to 10, wherein the at least one fuel tank is provided at a position higher than the fueling port.

12. The work vehicle according to claim 11, wherein the fueling port includes a receptacle that is inclined so that an internal portion of the receptacle is higher than an inlet of the receptacle.

13. The work vehicle according to any one of claims 1 to 10,
wherein the work vehicle is an agricultural machine.

14. The work vehicle according to claim 13, further comprising a power take-off shaft driven by the motor.

15. A work vehicle comprising:
a fuel cell;
at least one fuel tank to store fuel to be supplied to the fuel cell;
a motor connected to the fuel cell;
a vehicle frame that supports the fuel cell, the at least one fuel tank, and the motor, and rotatably supports front wheels and rear wheels; and
a fueling port connected to the at least one fuel tank via piping; wherein
the fueling port includes a receptacle that is inclined so that from an internal portion is higher than an inlet.

16. The work vehicle according to claim 15, wherein, when the work vehicle is stationary on a horizontal road surface, a central axis of the receptacle defines an inclination angle of 30 degrees or more and 90 degrees or less with respect to a horizontal plane.

17. The work vehicle according to claim 16, wherein, when the work vehicle is stationary on the horizontal road surface, the central axis of the receptacle defines the inclination angle of 70 degrees or more and 90 degrees or less with respect to the horizontal plane.

18. The work vehicle according to claim 16, wherein the piping includes a portion extending obliquely upward from a connection portion with the receptacle.

19. The work vehicle according to claim 16, wherein the piping includes a portion extending vertically upward from a connection portion with the receptacle.

20. The work vehicle according to any one of claims 15 to 19, wherein the at least one fuel tank is provided at a position higher than the fueling port.

21. The work vehicle according to any one of claims 15 to 19, wherein
the vehicle frame includes a left rear fender and a right rear fender that cover at least a portion of each of the rear wheels; and
the fueling port is provided on either the left rear fender or the right rear fender.

22. The work vehicle according to any one of claims 15 to 19, wherein
the vehicle frame includes a left rear fender and a right rear fender that cover at least a portion of each of the rear wheels, and
the fueling port is positioned between the left rear fender and the right rear fender.

23. The work vehicle according to any one of claims 15 to 19, further comprising a driver seat supported by the vehicle frame and a cabin surrounding the driver seat; wherein
the fueling port is provided rearward of the cabin.

24. The work vehicle according to any one of claims 15 to 19, further comprising a driver seat supported by the vehicle frame and a cabin surrounding the driver seat; wherein
the fueling port is provided inside the cabin.

25. The work vehicle according to any one of claims 15 to 19, further comprising a driver seat supported by the vehicle frame and a cabin surrounding the driver seat; wherein
the fueling port is provided in front of the cabin.

26. The work vehicle according to claim 25, further comprising a front housing to house the fuel cell; wherein
the front housing is supported by a front portion of the vehicle frame;
the fueling port is provided on the front housing.

27. The work vehicle according to claim 25, further comprising a front housing to house the fuel cell; wherein
the front housing is supported by a front portion of the vehicle frame;
the fueling port is disposed in an internal space of the front housing.

28. The work vehicle according to any one of claims 15 to 19, wherein the work vehicle is an agricultural machine.

29. The work vehicle according to claim 28, further comprising a power take-off shaft driven by the motor.
